(19)

Europäisches
Patentamt

European
Patent Office

Office européen
des brevets

(11)  **EP 3 336 800 B1**

(12)  # EUROPÄISCHE PATENTSCHRIFT

(45) Veröffentlichungstag und Bekanntmachung des
Hinweises auf die Patenterteilung:
**28.08.2019   Patentblatt 2019/35**

(51) Int Cl.:
*G06T 7/00* (2017.01)          *G06T 7/11* (2017.01)
*G06N 3/04* (2006.01)          *G06N 3/08* (2006.01)
*G06K 9/46* (2006.01)          *G06K 9/62* (2006.01)
*G06K 9/66* (2006.01)

(21) Anmeldenummer: **16205059.5**

(22) Anmeldetag: **19.12.2016**

(54) **BESTIMMEN EINER TRAININGSFUNKTION ZUM GENERIEREN VON ANNOTIERTEN TRAININGSBILDERN**

DETERMINATION OF A TRAINING FUNCTION FOR GENERATING ANNOTATED TRAINING IMAGES

DÉTERMINATION D'UNE FONCTION D'APPRENTISSAGE DESTINÉE À PRODUIRE DES IMAGES D'APPRENTISSAGE ANNOTÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.06.2018   Patentblatt 2018/25**

(73) Patentinhaber: **Siemens Healthcare GmbH
91052 Erlangen (DE)**

(72) Erfinder:
  • **Pauly, Olivier
    81241 München (DE)**
  • **Seegerer, Philipp
    94081 Fuerstenzell (DE)**

(56) Entgegenhaltungen:
**US-A1- 2015 238 148     US-A1- 2016 358 337**

• **Fausto Milletari ET AL: "Hough-CNN: Deep Learning for Segmentation of Deep Brain Regions in MRI and Ultrasound", , 31. Januar 2016 (2016-01-31), Seiten 1-34, XP055334930, DOI: 10.1016/j.cviu.2017.04.002 Gefunden im Internet: URL:https://arxiv.org/pdf/1601.07014v3.pdf [gefunden am 2017-01-12]**

• **OQUAB MAXIME ET AL: "Learning and Transferring Mid-level Image Representations Using Convolutional Neural Networks", 2014 IEEE CONFERENCE ON COMPUTER VISION AND PATTERN RECOGNITION, IEEE, 23. Juni 2014 (2014-06-23), Seiten 1717-1724, XP032649359, DOI: 10.1109/CVPR.2014.222 [gefunden am 2014-09-24]**

• **ALZU'BI AHMAD ET AL: "Semantic content-based image retrieval: A comprehensive study", JOURNAL OF VISUAL COMMUNICATION AND IMAGE REPRESENTATION, Bd. 32, 2015, Seiten 20-54, XP029278084, ISSN: 1047-3203, DOI: 10.1016/J.JVCIR.2015.07.012**

• **Arno Candel ET AL: "Deep Learning with H2O", , Februar 2015 (2015-02), XP055337289, Gefunden im Internet: URL:https://raw.githubusercontent.com/h2oa i/h2o/master/docs/deeplearning/DeepLearnin gBookletV1.pdf [gefunden am 2017-01-20]**

• **Junbo Zhao ET AL: "STACKED WHAT-WHERE AUTO-ENCODERS", , 14. Februar 2016 (2016-02-14), XP055337287, Gefunden im Internet: URL:https://arxiv.org/pdf/1506.02351v8.pdf [gefunden am 2017-01-20]**

**Beschreibung**

In der maschinellen Bildverarbeitung und Bildklassifikation konnte durch die Anwendung von Algorithmen des sogenannten tiefgehendem Lernen (ein englischer Fachbegriff ist "deep learning") große Fortschritte erzielt werden, wobei die Algorithmen anhand von sehr großer Datenmengen trainiert wurden. Ein Beispiel für solche Algorithmen sind tiefgehende künstliche neuronaler Netzwerken (ein englischer Fachbegriff ist "deep artificial neural networks", kurz "deep ANNs") oder tiefgehende faltende künstliche neuronaler Netzwerke (ein englischer Fachbegriff ist "deep convolutional artifical neuronal networks", kurz "deep convolutional ANNs"). Sehr große Datenmengen werden durch öffentlich zugängliche Datenbanken, insbesondere Bilddatenbanken wie "ImageNet" zur Verfügung gestellt.

Durch den Einsatz solcher Algorithmen in der maschinellen Bildverarbeitung oder in der Bildklassifikation ist es möglich, eine bessere Qualität und Leistung zu erzielen als ein Mensch. Das heißt beispielsweise, dass bei der gleichen Aufgabe maschinelle Bildklassifikatoren eine geringere Fehlerrate liefern als ein durchschnittlicher menschlicher Klassifikator, und die Bildklassifikation gleichzeitig schneller durchgeführt wird.

Diese Technologien können auch im Bereich der medizinischen Bildanalyse eingesetzt werden, beispielsweise für die Detektion und die Segmentierung von Organen, anatomischen Strukturen, Läsionen und anderen Pathologien, die üblicherweise mit einer computergestützten Diagnose (ein englischer Fachbegriff ist "computer-aided diagnosis", kurz CAD) detektiert werden können.

Beispielsweise ist aus der Druckschrift Milletari et al.: "Hough-CNN: Deep Learning for Segmentation of Deep Brain Regions in MRI and Ultrasound" (https://arxiv.org/abs/ 1601.07014v3) bekannt, ein künstliches neuronales Netzwerk zur Segmentierung von Gehirnstrukturen in Magnetresonz- oder Ultraschallaufnahmen zu verwenden. Aus der Druckschrift US 2015/238148 A1 ist die Verwendung von "marginal space deep neural networks" zur Detektion von anatomischen Objekten bekannt. Die Druckschrift US 2016/358337 A1 beschreibt die Verwendung von Faltungsfiltern zur semantischen Segmentierung von Bilddaten.

Während durch die Verwendung von "deep learning" große Fortschritte in der Medizin erwartet werden können, bleibt die konkrete Anwendung von künstlichen neuronalen Netzwerken eine große Herausforderung, da im Regelfall nicht im notwendigen Umfang annotierte Trainingsdaten zur Verfügung stehen. Hierbei kann eine Annotation durch das Kennzeichnen einer Region durch ein quadratisches Fenster oder eine Segmentierung erfolgen, oder durch Text und/oder Zahlenkommentare zum Bild, die beispielsweise eine bestimmte Diagnose im Bild anzeigen.

Das Annotieren von medizinischen Bilddaten ist eine langwierige und eintönige Aufgabe, muss aber trotzdem von medizinischem Fachpersonal, beispielsweise einem Radiologen durchgeführt werden. Daher ist es insbesondere zeitintensiv und kostenaufwändig, annotierte medizinische Bilddaten zu erzeugen.

Aus der Druckschrift Oquab et al.: "Learning and Transferring Mid-level Image Representations Using Convolutional Neural Networks", 2014 IEEE Conference on Computer Vision and Pattern Recognition (CVPR), IEEE, S. 1717 - 1724 ist eine Methode bekannt, ein mittels einer annotierten ersten Datenmenge trainiertes neuronales Netzwerk an eine annotierte zweite Datenmenge anzupassen, wobei die zweite Datenmenge deutlich kleiner als die erste Datenmenge sein kann. Für diese Methode ist aber weiterhin die Existenz einer ausreichend großen ersten Datenmenge notwendig.

Es ist aus der Druckschrift Ian J. GOODFELLOW, "Generative Adversarial Networks", arxiv 1406.2661 (2014) bekannt, mittels gegenläufig erzeugenden Netzwerken (ein englischer Fachbegriff ist "generative adversarial networks", kurz "GAN") Bilddaten zu erzeugen, die einer gegebenen Trainingsmenge von Bildern ähnlich sehen. Hierbei werden zwei künstliche neuronale Netzwerke mit konträren Aufgaben verwendet. Mit dieser Methode ist es aber nicht möglich, annotierte Trainingsbilddaten zu erzeugen.

Es ist daher die Aufgabe der vorliegenden Erfindung, eine Methode bereitzustellen, eine Trainingsfunktion zum schnellen und kostengünstigen Generieren von annotierte Bilddaten für das Training von selbstlernenden Algorithmen zu erzeugen.

Die Aufgabe wird gelöst durch ein Verfahren zur Bestimmung einer Trainingsfunktion nach Anspruch 1, durch eine Funktionsbestimmungseinheit nach Anspruch 13, durch ein Computerprogrammprodukt nach Anspruch 15, sowie durch ein computerlesbares Speichermedium nach Anspruch 16.

Nachstehend wird die erfindungsgemäße Lösung der Aufgabe in Bezug auf die beanspruchten Vorrichtungen als auch in Bezug auf das beanspruchte Verfahren beschrieben. Hierbei erwähnte Merkmale, Vorteile oder alternative Ausführungsformen sind ebenso auch auf die anderen beanspruchten Gegenstände zu übertragen und umgekehrt. Mit anderen Worten können die gegenständlichen Ansprüche (die beispielsweise auf eine Vorrichtung gerichtet sind) auch mit den Merkmalen, die in Zusammenhang mit einem Verfahren beschrieben oder beansprucht sind, weitergebildet sein. Die entsprechenden funktionalen Merkmale des Verfahrens werden dabei durch entsprechende gegenständliche Module ausgebildet.

Die Erfindung basiert auf einem ersten Empfangen eines Trainingsbildes und einer Trainingsbildinformation mittels einer Schnittstelle, wobei die Trainingsbildinformation eine Bildinformation des Trainingsbildes ist. Die Erfindung basiert weiterhin auf einem zweiten Empfangen einer isolierten Bildinformation mittels der Schnittstelle, wobei die isolierte Bildinformation von dem Trainingsbild unabhängig ist. Weiterhin erfolgt ein erstes Berechnen eines ersten Ergebnisses einer bildinformationsverarbeitenden ersten Funktion bei Anwendung auf die isolierte Bildinformation mittels der Recheneinheit. Weiterhin erfolgt ein zweites Berechnen eines zweiten Ergebnisses einer bildinformationsverarbeitenden zweiten Funktion bei Anwendung auf das Trainingsbild mittels der Recheneinheit. Weiterhin erfolgt ein Anpassen eines Parameters der bildinformationsverarbeitenden ersten Funktion und/oder der bildverarbeitenden zweiten Funktion basierend wenigstens auf dem ersten Ergebnis und dem zweiten Ergebnis mittels der Recheneinheit. Weiterhin erfolgt ein Bestimmen einer Trainingsfunktion basierend auf der bildinformationsverarbeitenden ersten Funktion mittels der Recheneinheit, wobei die Trainingsfunktion bei Anwendung auf eine Bildinformation ein zugehöriges Bild als Ausgabewert generiert.

Die Erfinder haben erkannt, dass durch die Verwendung einer bildinformationsverarbeitenden zweiten Funktion als Basis der Trainingsfunktion Trainingsbilder nicht nur aus zufälligen Daten, sondern aus Daten mit Informationsgehalt generiert werden können. Gleichzeitig werden durch dieses Vorgehen annotierte Trainingsdaten erzeugt, denn die Eingabe in eine solche Trainingsfunktion ist gleichzeitig die Annotierung der Ausgabe der Trainingsfunktion.

Durch die Verwendung des ersten Ergebnisses und des zweiten Ergebnisses bei der Anpassung der Parameter der ersten und der zweiten Funktion kann besonders gut der Fortschritt des Trainings beurteilt werden, und damit die Trainingsfunktion in besonders wenigen Iterationsschritten bestimmt werden.

Nach einem weiteren Aspekt der Erfindung sind die erste Funktion und/oder die zweite Funktion durch ein künstliches neuronales Netzwerk gegeben, weiterhin umfassen die Parameter des künstlichen neuronalen Netzwerks die Kantengewichte des künstlichen neuronalen Netzwerks. Die Erfinder haben erkannt, dass eine durch ein künstliches neuronales Netzwerk gegebene Funktion besonders gut dazu geeignet ist, an Trainingsdaten angepasst zu werden.

Nach einem weiteren Aspekt der Erfindung erfolgt das Anpassen der Kantengewichte durch Minimierung einer Kostenfunktion mittels Rückpropagation. Die Erfinder haben erkannt, dass durch die Verwendung einer Kostenfunktion effizient die Abweichung der Ausgabe eines künstlichen neuronalen Netzwerks von dem Vergleichswert erfasst werden kann. Weiterhin haben die Erfinder erkannt, dass mittels der Rückpropagation die Kostenfunktion besonders schnell minimiert werden kann.

Nach einem weiteren Aspekt der Erfindung umfasst eine Bildinformation eines Bildes eine Segmentierung des Bildes in wenigstens eine Bildregion. Die Erfinder haben erkannt, dass ein manuelles Segmentieren von Trainingsdaten besonders zeitaufwändig ist, und das Bestimmen einer Trainingsfunktion für diese Aufgabe das Erstellen von annotierten Trainingsdaten besonders beschleunigt.

Nach einem weiteren Aspekt der Erfindung umfasst eine Bildinformation eines Bildes eine Größe, die bewertet, ob ein gegebenes Objekt oder mehrere gegebene Objekte im Bild dargestellt sind. Bei einer Bildinformation kann es sich insbesondere auch um eine Eigenschaft eines Objekts handeln. Die Erfinder haben erkannt, dass aufgrund einer solchen einfachen Bildinformation besonders wenig Trainingsbilder und Trainingsbildinformationen notwendig sind, um die Trainingsfunktion zu bestimmen.

Nach einem weiteren Aspekt der Erfindung ist das Verfahren wie folgt ausgestaltet: Die bildinformationsverarbeitende erste Funktion ist eine Generatorfunktion, wobei eine Generatorfunktion bei Anwendung auf eine Bildinformation ein zugehöriges Bild als Ausgabewert generiert. Die bildverarbeitende zweite Funktion ist eine Klassifikationsfunktion, wobei eine Klassifikationsfunktion bei Anwendung auf ein Bild eine zugehörige Bildinformation als Ausgabewert generiert. Das erste Ergebnis ist ein berechnetes Bild und das zweite Ergebnis ist eine erste berechnete Bildinformation. Die Trainingsfunktion ist die bildinformationsverarbeitende erste Funktion. Das Verfahren umfasst weiterhin ein drittes Berechnen einer zweiten berechneten Bildinformation durch Anwenden der bildverarbeitenden Funktion auf das berechnete Bild. Die Erfinder haben erkannt, dass sich durch diese Wahl der ersten und der zweiten Funktion die Trainingsfunktion besonders einfach und schnell aus der zweiten Funktion ergibt. Weiterhin kann die bildverarbeitende zweite Funktion bereits als vortrainierte Funktion für das Training mit den durch die Trainingsfunktion berechneten annotierten Bilddaten genutzt werden.

Nach einem weiteren Aspekt der Erfindung umfasst die erste berechnete Bildinformation eine Schätzung einer ersten Wahrscheinlichkeit, dass das Trainingsbild in einer Menge von Trainingsbildern enthalten ist, daneben umfasst die zweite berechnete Bildinformation eine Schätzung einer zweiten Wahrscheinlichkeit, dass das berechnete Bild in einer Menge von Trainingsbildern enthalten ist. Die Erfinder haben erkannt, dass unter Verwendung einer solchen Bildinformation besonders gut eine Trainingsfunktion bestimmt werden kann, welche Bilder erzeugt, die den Trainingsbildern ähnlich sind.

Nach einem weiteren Aspekt der Erfindung basiert die Kostenfunktion wenigstens auf einer ersten Abweichung der ersten berechneten Bildinformation von der Trainingsbildinformation. Die Erfinder haben erkannt, dass durch die Einbeziehung dieser Abweichung in die Kostenfunktion die zweite Funktion dazu trainiert wird, besonders genau eine Bildinformation eines eingegebenen Bildes zu berechnen.

Nach einem weiteren Aspekt der Erfindung basiert die Kostenfunktion weiterhin wenigstens auf einer zweiten Abweichung der zweiten berechneten Bildinformation von der isolierten Bildinformation. Die Erfinder haben erkannt, dass durch die Einbeziehung dieser Abweichung in die Kostenfunktion die zweite Funktion dazu trainiert wird, besonders genau eine Bildinformation eines eingegebenen Bildes zu berechnen, und gleichzeitig die erste Funktion dazu trainiert wird, geeignete berechnete Bilder aus isolierten Bildinformationen zu generieren.

Nach einem weiteren Aspekt der Erfindung ist das Verfahren wie folgt ausgestaltet: Die bildinformationsverarbeitende erste Funktion ist ein Informationsautoencoder, wobei ein Informationsautoencoder bei Anwendung auf eine erste Bildinformation eine zweite Bildinformation als Ausgabewert generiert. Die bildverarbeitende zweite Funktion ist ein Bildautoencoder, wobei ein Bildautoencoder bei Anwendung auf ein erstes Bild ein zweites Bild als Ausgabewert generiert. Weiterhin weist die zentrale Schicht des Informationsautoencoders und die zentrale Schicht des Bildautoencoders die gleiche Anzahl an Zentralknoten auf. Das erste Ergebnis entspricht ersten Knotenwerten, wobei die ersten Knotenwerte die Werte der Knoten der zentralen Schicht des Informationsautoencoders sind, wenn die isolierte Bildinformation der Eingabewert des Informationsautoencoders ist. Das zweite Ergebnis entspricht zweiten Knotenwerten, wobei die zweiten Knotenwerte die Werte der Knoten der zentralen Schicht des Bildautoencoders sind, wenn das Trainingsbild der Eingabewert des Bildautoencoders ist. Weiterhin umfasst das Verfahren ein viertes Berechnen von dritten Knotenwerten, wobei die dritten Knotenwerte die Werte der Knoten der zentralen Schicht des Informationsautoencoders sind, wenn die Trainingsbildinformation der Eingabewert des Informationsautoencoders ist. Dabei ist die Trainingsfunktion eine Komposition des ersten Teils des Informationsautoencoders mit dem zweiten Teil des Bildautoencoders. Die Erfinder haben erkannt, dass durch eine Verwendung eines Bildautoencoders und eines Informationsautoencoders das Bestimmen der Parameter der ersten Funktion und/oder der zweiten Funktion besonders schnell möglich ist, da bei einem Autoencoder für jeden Eingabewert der vorhergesagte Ausgabewert bekannt ist, da der vorhergesagte Ausgabewert mit dem Eingabewert identisch ist. Weiterhin haben die Erfinder erkannt, dass die Knotenwerte der zentralen Schichten des Bildautoencoders und des Informationsautoencoders verwendet werden können, um eine Relation zwischen einem Bild und einer Bildinformation zu begründen, wenn die zentralen Schichten die gleiche Größe haben.

Nach einem weiteren Aspekt der Erfindung leistet ein Abstand der ersten Knotenwerte zu den zweiten Knotenwerten einen negativen Beitrag zur Kostenfunktion, und ein Abstand der zweiten Knotenwerte zu den dritten Knotenwerten leistet einen positiven Beitrag zur Kostenfunktion. Die Erfinder haben erkannt, dass durch eine derartige Wahl der Kostenfunktion und die darauf basierende Anpassung der Parameter der ersten und der zweiten Funktion die Knotenwerte der zentralen Schicht bei Anwendung des Bildautoencoders auf ein Trainingsbild und eines Informationsautoencoders auf die zugehörige Trainingsbildinformation besonders ähnlich sind, gleichzeitig aber die Knotenwerte bei Anwendung des Bildautoencoders auf ein Trainingsbild und des Informationsautoencoders auf eine isolierte Bildinformation einen besonders großen Abstand haben. Daher können Bildinformationen besonders gut zugehörigen Bildern und umgekehrt zugeordnet werden.

Nach einem weiteren Aspekt der Erfindung generiert die Trainingsfunktion derart aus einer Bildinformation als Eingabewert ein Bild als Ausgabewert, dass eine Bildinformation als Eingabewert des Informationsautoencoders verwendet wird, die Knotenwerte der zentralen Schicht des Informationsautoencoders auf die Knotenwerte der zentralen Schicht des Bildautoencoders übertragen werden, und der Ausgabewert der Trainingsfunktion dem resultierenden Ausgabewert des Bildautoencoders entspricht. Die Erfinder haben erkannt, dass durch diese Wahl der Trainingsfunktion und durch die Ähnlichkeit der zentralen Knotenwerte von Bildern und zugehörigen Bildinformationen besonders einfach annotierte Trainingsdaten erzeugt werden können.

Weiterhin betrifft die Erfindung eine Funktionsbestimmungseinheit, umfassend folgende Einheiten:

- Schnittstelle, ausgebildet zum ersten Empfangen eines Trainingsbildes und einer Trainingsbildinformation, wobei die Trainingsbildinformation eine Bildinformation des Trainingsbildes ist, weiterhin ausgebildet zum zweiten Empfangen einer isolierten Bildinformation, wobei die isolierte Bildinformation von dem Trainingsbild unabhängig ist,
- Recheneinheit, ausgebildet zum ersten Berechnen eines ersten Ergebnisses einer bildinformationsverarbeitenden ersten Funktion bei Anwendung auf die isolierte Bildinformation, weiterhin ausgebildet zum zweiten Berechnen eines zweiten Ergebnisses einer bildverarbeitenden zweiten Funktion bei Anwendung auf das Trainingsbild, weiterhin ausgebildet zum Anpassen eines Parameters der bildinformationsverarbeitenden ersten Funktion und/oder der bildverarbeitenden zweiten Funktion basierend wenigstens auf dem ersten Ergebnis und/oder dem zweiten Ergebnis, weiterhin ausgebildet zum Bestimmen einer Trainingsfunktion basierend auf der bildinformationsverarbeitenden ersten Funktion, wobei die Trainingsfunktion bei Anwendung auf eine Bildinformation ein zugehöriges Bild als Ausgabewert generiert.

Eine solche Funktionsbestimmungseinheit kann insbesondere dazu ausgebildet sein die zuvor beschriebenen erfindungsgemäßen Verfahren und ihre Aspekte auszuführen. Die Funktionsbestimmungseinheit ist dazu ausgebildet diese Verfahren und ihre Aspekte auszuführen, indem die Schnittstelle und die Recheneinheit ausgebildet sind die entsprechenden Verfahrensschritte auszuführen.

Die Erfindung betrifft auch ein Computerprogrammprodukt mit einem Computerprogramm sowie ein computerlesbares Medium. Eine weitgehend softwaremäßige Realisierung hat den Vorteil, dass auch schon bisher verwendete Funktionsbestimmungseinheiten auf einfache Weise durch ein Software-Update nachgerüstet werden können, um auf die erfindungsgemäße Weise zu arbeiten. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Es ist weiterhin die Aufgabe der vorliegenden Erfindung, schnell und kostengünstig annotierte Bilddaten für das Training von selbstlernenden Algorithmen zu generieren.

Zur Lösung dieser Aufgabe kann ein weiterer Aspekt der Erfindung ein Verfahren zum Generieren von Trainingsdaten betreffen, umfassend alle Verfahrensschritte des Anspruchs 1, weiterhin umfassend das Generieren von annotierten Trainingsdaten durch Anwendung der Trainingsfunktion auf eine Eingabebildinformation mittels der Recheneinheit.

Ein weiterer Aspekt der Erfindung kann das beschriebene Verfahren zum Generieren von Trainingsdaten betreffen, das die weiteren Aspekte der Erfindung nach den Ansprüchen 2 bis 12 realisiert.

Weiterhin kann die Erfindung eine Datengenerierungseinheit umfassend die Schnittstelle und die Recheneinheit der Funktionsbestimmungseinheit betreffen, wobei die Recheneinheit weiterhin zum Generieren von annotierten Trainingsdaten durch Anwendung der Trainingsfunktion auf eine Eingabebildinformation ausgebildet ist.

Eine solche Datengenerierungseinheit kann insbesondere dazu ausgebildet sein die zuvor beschriebenen erfindungsgemäßen Verfahren und ihre Aspekte auszuführen. Die Datengenerierungseinheit ist dazu ausgebildet diese Verfahren und ihre Aspekte auszuführen, indem die Schnittstelle und die Recheneinheit ausgebildet sind die entsprechenden Verfahrensschritte auszuführen.

Die Erfindung kann weiterhin ein Computerprogrammprodukt mit einem Computerprogramm betreffen, welches direkt in einen Speicher einer Datengenerierungseinheit ladbar ist, mit Programmabschnitten, um alle Schritte der zuvor beschriebenen erfindungsgemäßen Verfahren und ihrer Aspekte auszuführen, wenn die Programmabschnitte von der Datengenerierungseinheit ausgeführt werden.

Die Erfindung kann weiterhin ein computerlesbares Speichermedium, auf welchem von einer Datengenerierungseinheit lesbare und ausführbare Programmabschnitte gespeichert sind, um alle Schritte der zuvor beschriebenen erfindungsgemäßen Verfahren und ihrer Aspekte auszuführen, wenn die Programmabschnitte von der Datengenerierungseinheit ausgeführt werden.

Ein Bild umfasst eine zweidimensionale Anordnung von zweidimensionalen Pixeln oder eine N-dimensionale Anordnung von N-dimensionalen Voxeln, mit N größer oder insbesondere gleich 3. Ein Pixel oder ein Voxel umfasst dabei wenigstens einen Intensitätswert. Ein Intensitätswert kann dabei eine Gesamtintensität sein, oder eine Intensität eines Farbkanals von mehreren Farbkanälen.

Eine Bildinformation charakterisiert ein Bild, einen Teil eines Bildes oder ein im Bild dargestelltes Objekt. Eine Bildinformation kann insbesondere das Vorkommen oder das Fehlen eines gegebenen Objekts in dem Bild umfassen. Weiterhin kann eine Bildinformation auch die Wahrscheinlichkeit umfassen, dass ein Bild einer Verteilung von Trainingsbildern entstammt oder einer Menge von Bildern ähnlich ist. Weiterhin kann eine Bildinformation eine durch einen Bereich des Bildes definierte Maske umfassen. Weiterhin kann eine Bildinformation eine Segmentierung eines Bildes in eine oder mehrere Regionen umfassen. Hierbei ist durch eine Maske eine Segmentierung des Bildes in genau zwei Regionen definiert, wobei die erste Region der Maske entspricht, und die zweite Region den Teilen des Bildes außerhalb der Maske entspricht.

Eine isolierte Bildinformation ist von einem Trainingsbild unabhängig, wenn die isolierte Bildinformation keine Bildinformation von dem Trainingsbild ist. Eine von einem Trainingsbild und einer Trainingsbildinformation unabhängige isolierte Bildinformation kann eine Bildinformation sein, die synthetisch erzeugt wurde. Eine synthetisch erzeugte Bildinformation ist insbesondere nicht aus einem zugehörigen Bild extrahiert. Sie kann aber auch eine Bildinformation eines vom Trainingsbild verschiedenen anderen Bildes sein.

Eine bildverarbeitende Funktion ist eine Funktion, die als Eingabewert wenigstens ein Bild, insbesondere ein zweidimensionales Bild oder ein dreidimensionales Bild, erhält und in einen Ausgabewert umwandelt. Dabei kann der Ausgabewert weiterhin von einer Menge von Parametern der bildverarbeitenden Funktion abhängen. Der Eingabewert der bildverarbeitenden Funktion kann neben dem Bild noch andere Größen umfassen. Als bildverarbeitende Funktionen sind insbesondere faltende künstliche neuronale Netzwerke (ein englischer Fachbegriff ist "convolutional artificial neuronal network") bekannt.

Eine bildinformationsverarbeitende Funktion ist eine Funktion, die als Eingabewert eine Bildinformation erhält und in einen Ausgabewert umwandelt. Dabei kann der Ausgabewert weiterhin von einer Menge von Parametern der bildinformationsverarbeitenden Funktion abhängen. Der Eingabewert der bildinformationsverarbeitenden Funktion kann neben der Bildinformation noch andere Größen umfassen, insbesondere kann der Eingabewert eine Menge von Zufallsvariablen umfassen.

Ein Autoencoder ist ein aus Schichten aufgebautes künstliches neuronales Netzwerk, welches einen Eingabewert auf einem dem Eingabewert ähnlichen Ausgabewert abbildet. Dabei umfasst der Autoencoder wenigstens eine Eingabeschicht, eine Ausgabeschicht mit der gleichen Anzahl von Knoten wie die Eingabeschicht, und eine zentrale Schicht zwischen der Eingabeschicht und der Ausgabeschicht mit weniger Knoten als die Eingabeschicht. Die Zuordnung der Knoten der Eingabeschicht zu den Eingabedaten erfolgt auf die gleiche Weise wie die Zuordnung der Knoten der Ausgabeschicht zu den Ausgabedaten. Der Autoencoder kann noch weitere Schichten umfassen, weiterhin kann der Autoencoder insbesondere symmetrisch um die zentrale Schicht aufgebaut sein. Durch geringere Knotenzahl der zentralen Schicht im Vergleich zur Eingabe- und Ausgabeschicht, erfolgt eine Kompression der Eingabedaten, und eine Dekompression der komprimierten Eingabedaten zu den Ausgabedaten. Durch Anpassung wenigstens der Kantengewichte anhand von Trainingsdaten kann ein Autoencoder daher ein Kompressions- und ein Dekompressionsverfahren lernen.

Im Folgenden wird die Erfindung anhand der in den Figuren dargestellten Ausführungsbeispiele sowie anhand von Pseudocode näher beschrieben und erläutert.

Es zeigen

Fig. 1    eine schematische Darstellung eines Verfahrens aus dem Stand der Technik zur Bestimmung einer Trainingsfunktion,

Fig. 2    eine schematische Darstellung eines ersten Ausführungsbeispiels eines Verfahrens zur Bestimmung einer Trainingsfunktion,

Fig. 3    eine schematische Darstellung eines zweiten Ausführungsbeispiels eines Verfahrens zur Bestimmung einer Trainingsfunktion,

Fig. 4    eine schematische Darstellung eines dritten Ausführungsbeispiels eines Verfahrens zur Bestimmung einer Trainingsfunktion,

Fig. 5    eine schematische Darstellung der Trainingsfunktion im dritten Ausführungsbeispiel eines Verfahrens zur Bestimmung einer Trainingsfunktion,

Fig. 6    ein künstliches neuronales Netzwerk,

Fig. 7    ein Flussdiagramm des ersten und des zweiten Ausführungsbeispiels eines Verfahrens zur Bestimmung einer Trainingsfunktion,

Fig. 8    ein Flussdiagramm des dritten Ausführungsbeispiels eines Verfahrens zur Bestimmung einer Trainingsfunktion,

Fig. 9    eine Funktionsbestimmungseinheit zur Bestimmung einer Trainingsfunktion, ausgebildet ein erfindungsgemäßes Verfahren auszuführen.

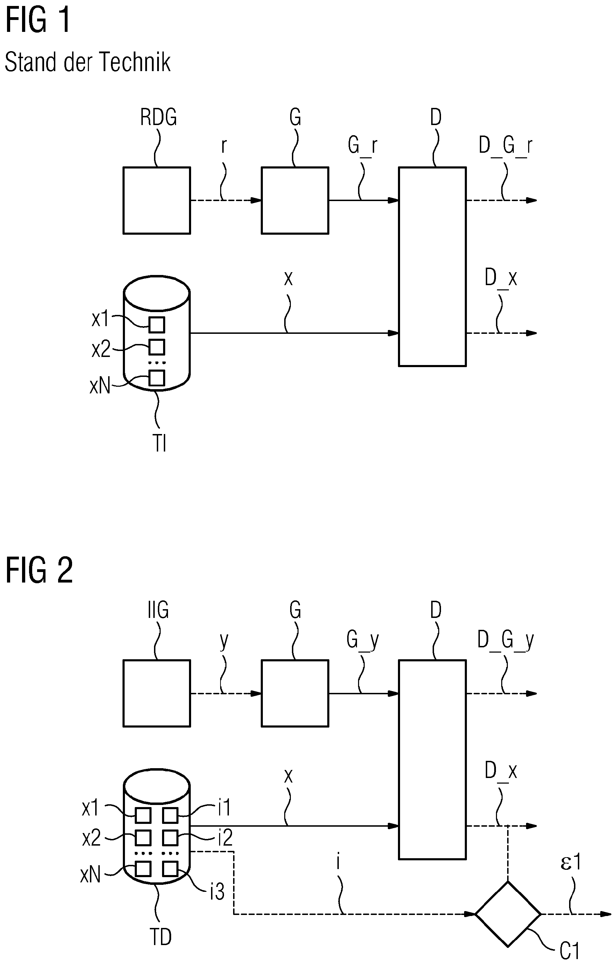

Fig. 1 zeigt eine schematische Darstellung eines Verfahrens zur Bestimmung einer Trainingsfunktion aus dem Stand der Technik. Dieses Verfahren ist in der Veröffentlichung Ian J. GOODFELLOW, "Generative Adversarial Networks", arxiv 1406.2661 (2014) beschrieben.

Das Verfahren basiert auf einer Menge x1, x2, ..., xN von Trainingsbildern, die in einer Datenbank TI gespeichert sind. Auf ein Trainingsbild x aus der Menge x1, x2, ..., xN der Trainingsbilder wird eine bildverarbeitende zweite Funktion D angewendet, wobei die bildverarbeitende zweite Funktion D ein Bild x auf eine Wahrscheinlichkeit D_x abbildet, dass das Trainingsbild x in der Menge x1, x2, ..., xN der Trainingsbilder enthalten ist. Weiterhin wird eine datenverarbeitende Funktion G auf einen Vektor r von Zufallszahlen angewendet und erzeugt ein berechnetes Bild G_r, wobei der Vektor r von Zufallszahlen von einem Zufallszahlengenerator RDG erzeugt wird. Die bildverarbeitende zweite Funktion D wird ebenfalls auf das berechnete Bild G_r angewendet und schätzt die Wahrscheinlichkeit D_G_r, dass das Bild G_r aus der Menge x1, x2, ..., xN der Trainingsdaten gewählt ist.

Weiterhin werden zwei Kostenfunktionen, die von D_G_r und D_x abhängen, durch Anpassung von Parametern der ersten Funktion G und der zweiten Funktion D minimiert. Durch eine geeignete Wahl der Kostenfunktion wird die erste Funktion G so trainiert, dass die bildverarbeitende zweite Funktion D nicht entscheiden kann, ob G_x aus der Menge x1, x2, ..., xN der Trainingsdaten gewählt ist, also D_G_x = 0.5 ist.

Fig. 2 zeigt ein erstes Ausführungsbeispiel eines Verfahrens zum Bestimmen einer Trainingsfunktion. Hierbei sind die bildinformationsverarbeitende erste Funktion G und die bildverarbeitende zweite Funktion D jeweils als künstliches neuronales Netzwerk ANN ausgebildet, die Parameter der ersten Funktion G und der zweiten Funktion D sind durch die Kantengewichte des künstlichen neuronalen Netzwerks ANN gegeben. Die erste Funktion G und die zweite Funktion D können aber auch durch andere durch Parameter gegebene Kombinationen von Basisfunktionen gegeben sein, beispielsweise als Kombination einer Fourierbasis oder als Kombination von Polynomen.

In diesem Ausführungsbeispiel ist eine Bildinformation durch eine binäre Variable gegeben, die angibt, ob in einem Bild ein vorgegebenes Merkmal enthalten ist, in diesem Beispiel ein Bruch eines in einem Röntgenbild dargestellten Knochens. Es ist natürlich auch möglich, andere vorgegebene Merkmale, andere Bildinformationen sowie andere Bilder zu verwenden.

Eine Trainingsdatenbank TD umfasst in diesem Ausführungsbeispiel Trainingsbilder x1, x2, ..., xN von menschlichen Knochen mit zugehörigen Trainingsbildinformationen i1, i2, ..., iN. Die Trainingsbildinformationen i1, i2, ..., iN sind hier jeweils eine binäre Variable, die angibt, ob der im zugehörigen Trainingsbild dargestellte Knochen einen Bruch aufweist. Aus den Trainingsbildern x1, x2, ..., xN wird ein Trainingsbild x ausgewählt, auf das die zweite Funktion D angewendet wird. Die erste berechnete Bildinformation D_x ist in diesem Ausführungsbeispiel ein zweidimensionaler Vektor mit Einträgen zwischen 0 und 1, wobei der erste Eintrag des Vektors angibt, mit welcher Wahrscheinlichkeit das Trainingsbild x ein reales Bild oder ein Bild aus der Trainingsdatenbank TD ist, und wobei der zweite Eintrag des Vektors angibt, mit welcher Wahrscheinlichkeit der abgebildete Knochen einen Knochenbruch aufweist.

Weiterhin wird durch einen Generator IIG im gezeigten Ausführungsbeispiel ein Paar aus einem Zufallsvektor und einer isolierten Bildinformation y erzeugt, wobei die isolierte Bildinformation y hier ebenfalls eine binäre Variable ist. Ein Zufallsvektor ist in diesem Beispiel ein Bild mit Pixeln, deren Intensität gemäß einer Gleichverteilung zwischen einem Minimalwert und einem Maximalwert zufällig verteilt ist. Die Intensität der Pixel kann aber auch gemäß einer anderen Verteilung verteilt sein, beispielsweise gemäß einer Normalverteilung. Die erste Funktion G erzeugt aus dem Zufallsvektor und der isolierten Bildinformation y ein berechnetes Bild G_y. Auf dieses berechnete Bild G_y wird die zweite Funktion D angewendet, die zweite berechnete Bildinformation D_G_y ist in diesem Ausführungsbeispiel ein zweidimensionaler Vektor mit Einträgen zwischen 0 und 1, wobei der erste Eintrag angibt, mit welcher Wahrscheinlichkeit das berechnete Bild G_y in der Trainingsdatenbank TD enthalten ist, und wobei der zweite Eintrag angibt, mit welcher Wahrscheinlichkeit der abgebildete Knochen einen Knochenbruch aufweist.

In diesem Ausführungsbeispiel werden die Parameter der ersten Funktion G und der zweiten Funktion D durch Minimierung der Kostenfunktionen $K_G$ und $K_D$ mittels Rückpropagation angepasst. Hierbei ist dem Fachmann die Rückpropagation für künstliche neuronale Netzwerke bekannt, auf eine genauere Beschreibung wird daher hier verzichtet. Die Kostenfunktion basiert hierbei jeweils auf der ersten Komponente der ersten berechneten Bildfunktion D_x und der zweiten berechneten Bildinformation D_G_y, wobei die Beiträge zu der Kostenfunktion hier durch die binäre Kreuzentropie

$$BCE(z, z') \propto z' \cdot \log(z) + (1 - z') \cdot \log(1 - z)$$

gegeben sind, wobei hier z der berechnete Wert der Größe ist, und z' der tatsächliche Wert der Größe. Die Kostenfunktionen ergeben sich daher als

$$K_D = BCE(D\_x, 1) + BCE(D\_G\_y, 0) \propto \log(D\_x) + \log(1 - D\_G\_y)$$

$$K_G = BCE(D\_G\_y, 1) \propto \log(D\_G\_y)$$

wobei jeweils nur die erste Komponente der ersten berechneten Bildinformation D_x und der zweiten berechneten Bildinformation D_G_y verwendet wird. Die beiden Kostenfunktionen $K_D$, $K_G$ haben also alternierende Komponenten, so dass bei einer Minimierung von beiden Kostenfunktionen die erste Funktion G und die zweite Funktion D derart trainiert werden, sich gegenseitig zu überlisten. Es sind auch andere Kostenfunktionen $K_D$, $K_G$ möglich, welche diese Eigenschaft aufweisen.

Durch einen optionalen, in diesem Ausführungsbeispiel dargestellten Vergleich zwischen der Bildinformation i des Trainingsbildes x und der zweiten Komponente der ersten berechneten Bildinformation D_x mittels einer Vergleichsfunktion C1 kann der Betrag der Abweichung $\varepsilon 1$ zwischen diesen Größen berechnet werden. Der Betrag der Abweichung $\varepsilon 1$ geht positiv in die Kostenfunktion $K_D$ für die zweite Funktion D ein, insbesondere wächst diese Kostenfunktion $K_D$ mit wachsendem Betrag der Abweichung $\varepsilon 1$, insbesondere kann der Beitrag zur Kostenfunktion auch durch eine binäre Kreuzentropie gegeben sein, so dass durch eine Minimierung der Kostenfunktion $K_D$ auch der Betrag der Abweichung $\varepsilon 1$ minimiert wird.

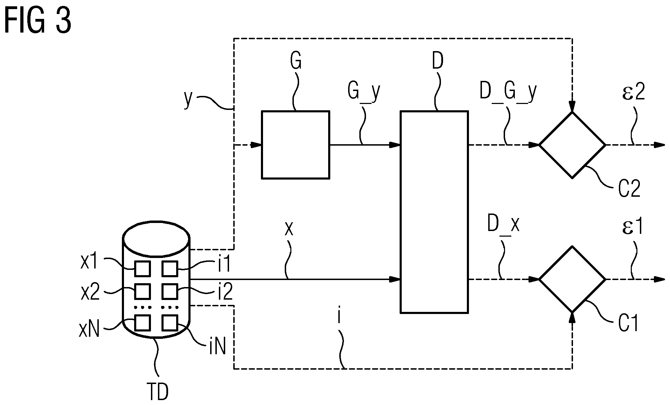

Fig. 3 zeigt eine schematische Darstellung eines zweiten Ausführungsbeispiels eines Verfahrens zur Bestimmung einer Trainingsfunktion. Das zweite Ausführungsbeispiel umfasst hierbei im Wesentlichen die gleichen Elemente des ersten Ausführungsbeispiels des Verfahrens gemäß Fig. 2, wobei bezüglich gleich bleibender Elemente auf die Beschreibung der schematischen Darstellung in Fig. 2 verwiesen wird.

In diesem Ausführungsbeispiel ist eine Bildinformation eines Bildes eine Segmentierung einer Interessensregion, hier eines Tumors in einem Bild des Tumors. Eine Segmentierung eines Bildes ist in diesem Ausführungsbeispiel dadurch gegeben, dass einem Pixel, das als Teil des Tumors betrachtet werden kann, in der Segmentierung der Wert 1 zugewiesen wird. Einem Pixel, das nicht als Teil des Tumors betrachtet werden kann, wird in der Segmentierung der Wert 0 zugewiesen. Eine solche Bildinformation kann gleichwertig auch als Maske des Tumors aufgefasst werden.

Eine Trainingsdatenbank TD umfasst in diesem Ausführungsbeispiel Trainingsbilder x1, x2, ..., xN mit zugehörigen Segmentierungen i1, i2, ..., iN. Aus den Trainingsbildern x1, x2, ..., xN wird ein Trainingsbild x ausgewählt, auf die die zweite Funktion D angewendet wird. Die erste berechnete Bildinformation D_x ist in diesem Ausführungsbeispiel eine Segmentierung des Trainingsbildes x. Die isolierte Bildinformation y ist in diesem Ausführungsbeispiel eine Segmentierung eines Trainingsbildes x1, x2, ..., xN, wobei das zur isolierten Bildinformation gehörige Trainingsbild x1, x2, ..., xN nicht mit dem Trainingsbild x identisch ist. Es ist auch möglich, eine künstliche Segmentierung zu erzeugen.

Die erste Funktion G erhält neben der isolierten Segmentierung y in diesem Ausführungsbeispiel weiterhin als Eingabe einen Zufallsvektor, der in der Fig. 3 aus Gründen der Übersichtlichkeit nicht dargestellt ist. Der Zufallsvektor ist in diesem Beispiel insbesondere ein Zufallsbild, wobei das Zufallsbild die gleiche Anzahl von Pixeln aufweist wie die Trainingsbilder x1, x2, ..., xN, und wobei jedes Pixel zwischen einem Minimalwert und einem Maximalwert gleichverteilt ist. Es sind aber auch andere Zufallsbilder oder Zufallsvektoren denkbar, beispielsweise normalverteilte Pixel. Die erste Funktion G erzeugt aus dem Zufallsvektor und der isolierten Segmentierung y ein berechnetes Bild G_y. Auf dieses berechnete Bild G_y wird die zweite Funktion D angewendet, die zweite berechnete Bildinformation D_G_y ist in diesem Ausführungsbeispiel eine Segmentierung des berechneten Bildes G_y. Im dargestellten Ausführungsbeispiel wird die erste berechnete Segmentierung D_x mit der Trainingsbildinformation i mittels einer ersten Vergleichseinheit C1 verglichen, weiterhin wird die zweite berechnete Segmentierung D_G_y mit der isolierten Segmentierung y mittels einer zweiten Vergleichseinheit C2 verglichen. Dabei berechnet die Vergleichseinheit C1 eine erste Abweichung ε1, und die zweite Vergleichseinheit C2 berechnet eine zweite Abweichung ε2. Im gezeigten Ausführungsbeispiel ist die erste Abweichung ε1 zwischen der ersten berechneten Segmentierung D_x und der Trainingsbildinformation i durch den Sørensen-Dice-Koeffizienten SDC(D_x,i) gegeben, mit

$$SDC(x,y) = \frac{2\sum_j x_j y_j}{\sum_j x_j^2 + \sum_j y_j^2}.$$

Statt der quadrierten Pixelwerte im Nenner ist es ebenfalls möglich, die Beträge der Pixelwerte zu verwenden. Die gezeigte Form des Sørensen-Dice-Koeffizienten hat aber den Vorteil, dass der für die Rückpropagation notwendige Gradient der Kostenfunktion in einer geschlossenen Form angegeben werden kann. Die zweite Abweichung ε2 zwischen der zweiten berechneten Segmentierung D_G_y und der isolierten Segmentierung y ist durch die Summe der quadratischen Differenzen (ein englischer Fachbegriff ist "sum of squared differences") SSD(D_G_y,y) gegeben, mit

$$SSD(x,y) = \sum_j (x_j - y_j)^2.$$

Die Abweichungen ε1 und ε2 gehen dann in die Kostenfunktion $K_D$ der zweiten Funktion D und/oder die Kostenfunktion $K_G$ der ersten Funktion G ein. Es ist ebenfalls möglich, für die Abweichungen ε1 und ε2 andere funktionale Zusammenhänge zu verwenden. Die Parameter der ersten Funktion G und der zweiten Funktion D werden dann über eine Minimierung der Kostenfunktionen $K_G$ und $K_D$ durch Rückpropagation angepasst.

Im ersten Ausführungsbeispiel und im zweiten Ausführungsbeispiel, dargestellt in den Fig. 2 und Fig. 3, ist die Trainingsfunktion TF identisch mit der ersten bildinformationsverarbeitenden Funktion G.

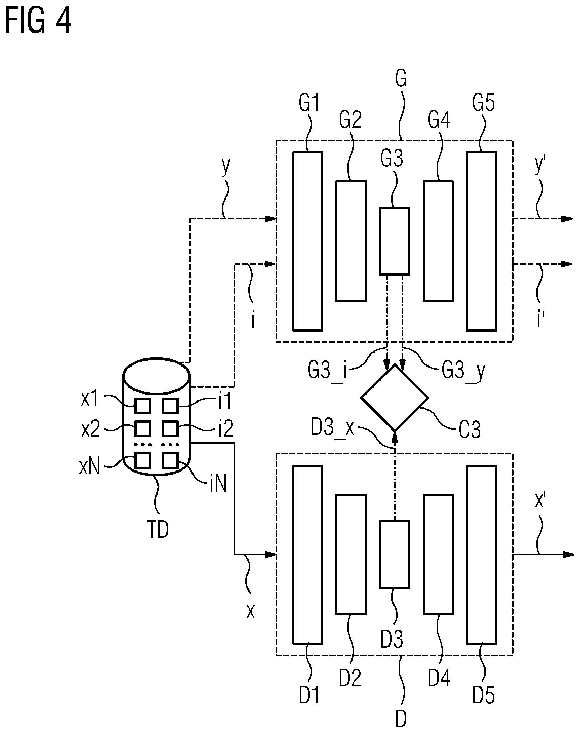

Fig. 4 zeigt ein drittes Ausführungsbeispiel eines Verfahrens zur Bestimmung einer Trainingsfunktion. Das dritte Ausführungsbeispiel umfasst hierbei teilweise die gleichen Elemente des ersten Ausführungsbeispiels des Verfahrens gemäß Fig. 2, wobei bezüglich gleich bleibender Elemente auf die Beschreibung der schematischen Darstellung in Fig. 2 verwiesen wird. Die bildverarbeitende zweite Funktion D und die bildinformationsverarbeitende erste Funktion G sind in dem dritten Ausführungsbeispiel jeweils durch einen Autoencoder realisiert. Beide Autoencoder umfassen in diesem Beispiel 5 Knotenschichten G1, ... G5, D1, ... D5, sie können aber auch eine andere, ungerade Anzahl an Knotenschichten umfassen. Die Anzahl der Knoten in der zentralen Schicht G3 der ersten Funktion G ist in diesem Ausführungsbeispiel gleich der Anzahl der Knoten in der zentralen Schicht D3 der zweiten Funktion D.

Im dargestellten dritten Ausführungsbeispiel soll eine Trainingsfunktion TF bestimmt werden, wobei die Trainingsfunktion TF aus einer gegebenen Segmentierung y ein zugehöriges Bild TF_y mit dieser Segmentierung y bestimmt. Die Trainingsbildinformation i und die isolierte Bildinformation y können also auch als Bilder aufgefasst werden, wobei ein Pixel nur die Werte 0 und 1 annehmen kann, wobei die Bilder die gleiche Anzahl von Pixeln umfassen wie die Trainingsbilder x1, x2, ..., xN.

Ein Trainingsschritt besteht darin, dass die zweite Funktion D ein Trainingsbild x aus der Menge x1, x2, ..., xN der Trainingsbilder als Eingabedaten erhält und auf ein Ausgabebild x' abbildet. Bei dieser Abbildung haben die Knoten der zentralen Schicht D3 die zweiten Knotenwerte D3_x. Weiterhin erhält die erste Funktion G die zum Trainingsbild x zugehörige Bildinformation i als Eingabeinformation und bildet diese auf die Ausgabeinformation i' ab. Bei dieser Abbildung haben die Knoten der zentralen Schicht G3 der ersten Funktion G die dritten Knotenwerte G3_i. Weiterhin erhält die erste Funktion G eine weitere isolierte Bildinformation y als Eingabeinformation, und bildet diese auf die Ausgabeinformation y' ab, wobei die isolierte Bildinformation y aus der Menge der Trainingsbildinformationen i1, i2, ..., iN ausgewählt wird und von der Trainingsbildinformation i verschieden ist. Bei dieser Abbildung haben die Knoten der zentralen Schicht G3 der ersten Funktion G die ersten Knotenwerte G3_y.

In die Kostenfunktion gehen der Abstand des Trainingsbilds x vom Ausgabebild x' und der Abstand der Trainingsbildinformation i von der Bildinformation i' positiv ein. Alternativ kann auch weiterhin der Abstand der isolierten Bildinformation y von der Bildinformation y' positiv eingehen. Als Beitrag zur Kostenfunktion wird jeweils die Summe der pixelbezogenen quadratischen Abweichungen (ein englischer Fachbegriff ist "sum of squared differences", kurz "SSD") der Bilder x, x' und der Bildinformationen i, i' sowie y, y' verwendet. Es können aber auch andere Abstandsbegriffe verwendet werden.

Weiterhin gehen in die Kostenfunktion der Abstand der zentralen Knotenwerte D3_x von den zentralen Knotenwerten G3_i positiv ein, der Abstand der zentralen Knotenwerte D3_x von den zentralen Knotenwerten G3_y geht positiv ein. Zur Berechnung des Abstands werden die Knotenwerte D3_x, G3_i, G3_y als Vektoren in einem n-dimensionalen Vektorraum aufgefasst, wobei n der Anzahl der Knoten in den zentralen Schichten D3 und G3 entspricht, und der j-te Wert des Vektors dem Wert des j-ten Knotens in der zentralen Schicht D3, G3 entspricht. Als Abstand der Knotenwerte wird jeweils die Summe der quadrierten Differenzen der Vektorkomponenten aufgefasst. Es sind aber auch andere Abstandsbegriffe denkbar, insbesondere Abstandsbegriffe aus einer L1-Norm (Manhattan-Metrik), aus der Maximums-Norm oder der Minimums-Norm. Die Abstände werden durch eine Vergleichsfunktion C3 bestimmt. Durch die Wahl des Vorzeichens der Beiträge zur Kostenfunktion wird erreicht, dass die zweiten Knotenwerte D3_x und die dritten Knotenwerte G3_i in dem n-dimensionalen Vektorraum nahe beieinander liegen, die zweiten Knotenwerte D3_x und die ersten Knotenwerte G3_y aber in dem n-dimensionalen Vektorraum weit entfernt liegen. Dadurch haben das Bild x und die zugehörige Bildinformation i des Bildes x ähnliche Kantenwerte, eine nicht-zugehörige Bildinformation y hat andere Kantenwerte.

Die Kostenfunktion wird dann mittels einer Rückpropagation durch die Anpassung der Kantengewichte der Kanten zwischen den Schichten D1, D2, D3, D4, D5 der zweiten Funktion D und der Kanten zwischen den Schichten G1, G2, G3, G4, G5 der ersten Funktion G, sowie eventuell der Kantengewichte der Eingangskanten der ersten Funktion G und der zweiten Funktion D minimiert.

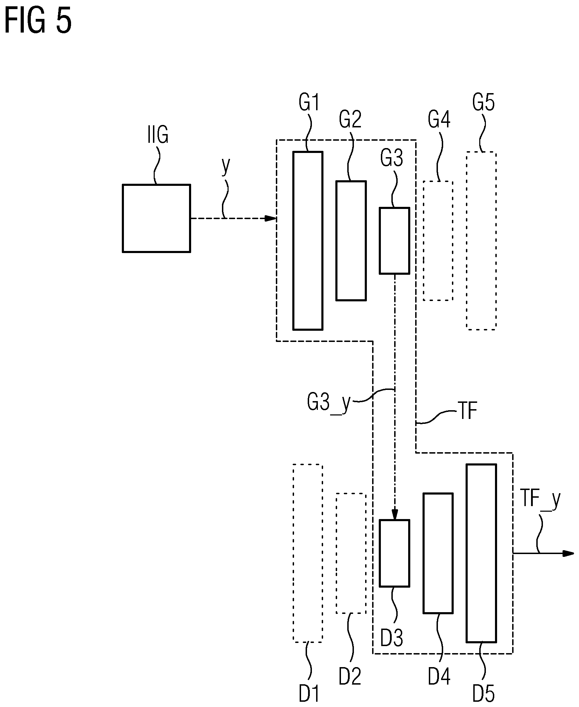

Fig. 5 zeigt eine schematische Darstellung der Trainingsfunktion TF im dritten Ausführungsbeispiel eines Verfahrens zur Bestimmung einer Trainingsfunktion. Die Trainingsfunktion TF ist in diesem Beispiel ein künstliches neuronales Netzwerk ANN umfassend die Schichten G1, G2, G3 der ersten Funktion G und die Schichten D3, D4, D5 der zweiten Funktion D. Hierbei bleiben die Kanten zwischen den Schichten G1 und G2, den Schichten G2 und G3, den Schichten D3 und D4 sowie den Schichten D4 und D5 mit den jeweiligen Gewichten erhalten, weiterhin bleibt die Zuordnung zwischen der isolierten Bildinformation y und den Eingabeknoten der Schicht G1 erhalten. Weiterhin wird zwischen dem j-ten Knoten der zentralen Schicht G3 und dem j-ten Knoten der zentralen Schicht D3 eine Kante mit Kantengewicht 1 eingeführt sowie als Aktivierungsfunktion der Knoten der Zentralen Schicht D3 die Identität gewählt, so dass der Wert des j-ten Knotens der zentralen Schicht D3 immer dem Wert des j-ten Knotens der zentralen Schicht G3 entspricht, für alle Knotenpaare aus den zentralen Schichten G3, D3.

Die so konstruierte Trainingsfunktion bildet nun beliebige Bildinformationen y auf ein Bild TF_y ab, welches die Bildinformation y aufweist. Im dargestellten Ausführungsbeispiel erden die Bildinformationen y durch eine Generatoreinheit IIG erzeugt.

Um eine isolierte Segmentierung y zu bestimmen, können Strukturen, die typischerweise in den Trainingsbildern x1, x2, ..., xN oder den Trainingssegmentierungen i1, i2, ..., iN auftreten, durch geometrische Formen und/oder Intensitätsverteilungen parametrisiert werden, und daher beliebig viele isolierte Segmentierungen y bestimmt werden. Beispielsweise können zur Erkennung von Brustkrebs Gefäße und Milchdrüsen als Linien, dichte Gebiete als Ellipsen und Krebsläsionen als Strukturen mit Spitzen beschrieben werden. Krebsläsionen können insbesondere auch durch geometrische Strukturen beschrieben werden, die aus einem fraktalen Wachstumsprozess entstehen.

In den Fig. 1 bis Fig. 5 entsprechen durchgezogenen Pfeile realen Bildern x, x' sowie berechneten Bildern G_r, G_y. Gestrichelte Pfeile entsprechen Bildinformationen y, i, Zufallsvektoren r, berechnete Bildinformationen D_x, D_G_y, D_r sowie Abweichungen $\varepsilon 1$, $\varepsilon 2$ von Bildinformationen. Gestricheltgepunktete Pfeile entsprechen Knotenwerte G3_i, G3_y, D3_x von zentralen Schichten G3, D3. Hierbei werden die entsprechenden Daten von der Einheit am Fußpunkt eines Pfeils zu der Einheit an der Spitze des Pfeils weitergegeben.

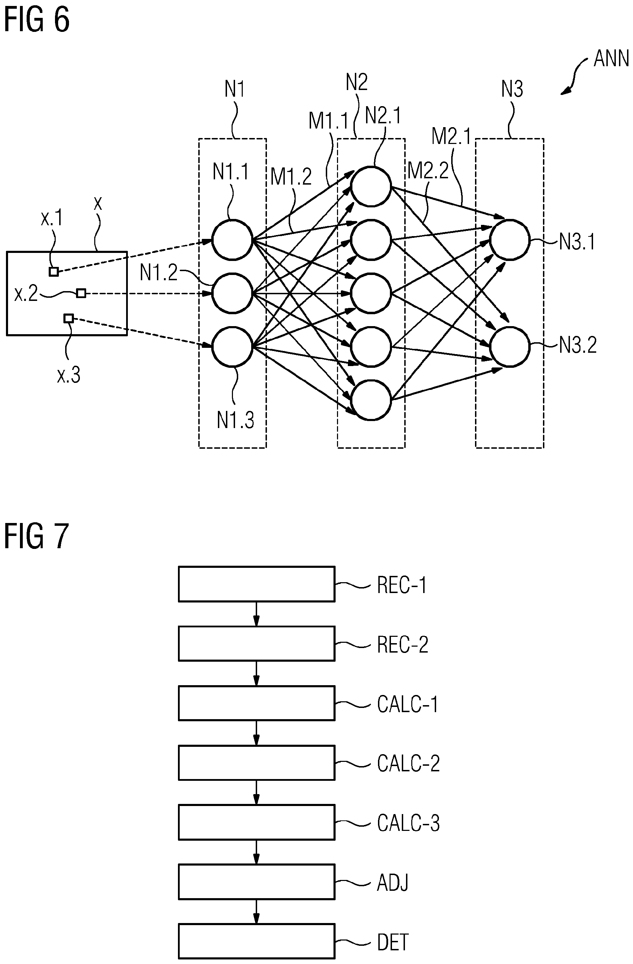

Fig. 6 zeigt ein Beispiel eines bildverarbeitenden künstlichen neuronalen Netzwerks ANN. Ein künstliches neuronales Netzwerk ANN besteht aus Knoten N1.1, N1.2, N1.3, N2.1, N3.1, N3.2 und Kanten M1.1, M1.2, M2.1, M2.2, die an einem Startknoten beginnen und/oder an einem Endknoten enden. Beispielsweise beginnt die Kante M2.1 am Startknoten N1.1 und endet am Endknoten N2.1. Im dargestellten Ausführungsbeispiel ist jedem Knoten N1.1, N1.2, N1.3, N2.1, N3.1, N3.2 und jeder Kante M1.1, M1.2, M2.1, M2.2 ein Zahlenwert zugeordnet, insbesondere eine reelle Zahl. Der Zahlenwert einer Kante M1.1, M1.2, M2.1, M2.2 kann als Kantengewicht bezeichnet werden. Der Wert eines Knotens N1.1, N1.2, N1.3, N2.1, N3.1, N3.2 hängt dabei von den Kantengewichten aller Kanten ab, die den Knoten als Endknoten haben, sowie den Knotenwerten der zugehörigen Startknoten. Im gezeigten Ausführungsbeispiel wird der Wert $k_i$ eines Knotens i mit der Formel

$$k_i = F\left(\sum_{j \in EG(i)} w_{ij} k_j\right)$$

berechnet, wobei die Summe über alle Knoten j läuft, die zu Startknoten einer Kante mit j als Endknoten sind, und wobei $k_i$ der Wert des Knotens j und $w_{ij}$ das Kantengewicht der Kante zwischen den Knoten i und j ist. Die Funktion F ist in diesem Beispiel die tanh-Funktion, es sind aber auch andere Funktionen möglich, beispielsweise eine Stufenfunktion. Es sind ebenfalls andere funktionale Zusammenhänge zwischen Knotenwerten möglich.

Das im Ausführungsbeispiel dargestellte künstliche neuronale Netzwerk ANN umfasst mehrere Schichten N1, N2, N3 von Knoten, darunter eine Eingabeschicht N1, eine Ausgabeschicht N3 sowie eine verdeckten Schicht N2. Das künstliche neuronale Netzwerk ANN kann auch mehrere verdeckte Schichten umfassen. Die Eingabeschicht umfasst Eingabeknoten N1.1, N1.2, N1.3, die Ausgabeschicht umfasst Ausgabeknoten N3.1, N3.2. Im dargestellten Ausführungsbeispiel verbinden Kanten immer nur Knoten von benachbarten Schichten, wobei Kanten nur in eine Richtung zeigen (ein englischer Fachbegriff hierfür ist "feed forward network"). Beispielsweise hat jede Kante mit einem Knoten aus der Schicht N1 als Startknoten einen Knoten aus der Schicht N2 als Endknoten. Es ist aber auch möglich, dass Kanten zwischen nicht-benachbarten Schichten, insbesondere innerhalb der gleichen Schicht, vorhanden sind, oder dass Kanten in unterschiedliche Richtungen verlaufen. Weiterhin ist es möglich, künstliche neuronale Netzwerke ANN ohne Schichtstruktur zu verwenden.

Das in Fig. 6 dargestellte künstliche neuronale Netzwerk ANN ist ein bildverarbeitendes künstliches neuronales Netzwerk ANN, das ein Bild x als Eingabe erhält. Dabei werden die Intensitätswerte von Pixeln x.1, x.2, x.3 auf die Eingabeknoten des künstlichen neuronalen Netzwerks ANN übertragen. Zur Vereinfachung sind in Fig. 6 nur drei Eingabeknoten N1.1, N1.2, N1.3 zu drei Pixeln x.1, x.2, x.3 dargestellt, im Allgemeinen umfasst ein bildverarbeitendes künstliches neuronales Netzwerk ANN mehr Eingabeknoten, insbesondere einen Eingabeknoten zu jedem Pixel des Eingabebildes. Das in Fig. 6 dargestellte künstliche neuronale Netzwerk ANN umfasst zwei Ausgabeknoten N3.1, N3.2, wobei der Wert des Knotens N3.1 der Wahrscheinlichkeit entspricht, dass das Eingabebild x aus einer Menge von Trainingsbildern x1, x2, ..., xN stammt, und wobei der Wert des Knotens N3.2 der Wahrscheinlichkeit entspricht, dass in einem im Bild x dargestellten Knochen ein Knochenbruch vorhanden ist. Es ist auch möglich, dass das künstliche neuronale Netzwerk ANN die gleiche Anzahl von Ein- und Ausgabeknoten aufweist. Ein solches künstliches neuronales Netzwerk ANN ist dazu geeignet, eine Segmentierung eines Eingabebildes x zu berechnen.

Fig. 7 zeigt ein Flussdiagramm des in Fig. 1 dargestellten ersten Ausführungsbeispiel des Verfahrens und des in Fig. 2 dargestellten zweiten Ausführungsbeispiels des Verfahrens. Hierbei kann auch jeweils eine andere als die dargestellte Reihenfolge der Verfahrensschritte verwendet werden.

Der erste Schritt im dargestellten Flussdiagramm ist das erste Empfangen REC-1 eines Trainingsbildes x und einer Trainingsbildinformation i mittels einer Schnittstelle FDU.1, wobei die Trainingsbildinformation i eine Bildinformation des Trainingsbildes x ist. Das Trainingsbild x und die Trainingsbildinformation i sind hierbei in einer Datenbank TD gespeichert, die mehrere Trainingsbilder x1, x2, ..., xN und Trainingsbildinformationen i1, i2, ..., iN umfasst.

Der nächste Schritt im dargestellten Flussdiagramm ist das zweite Empfangen REC-2 einer isolierten Bildinformation y mittels der Schnittstelle FDU.1, wobei die isolierte Bildinformation y von dem Trainingsbild x unabhängig ist. Im ersten Ausführungsbeispiel wird die isolierte Bildfunktion von einem Generator IIG erzeugt, im zweiten Ausführungsbeispiel ist die isolierte Bildinformation y eine der Trainingsbildinformationen i1, i2, ..., iN aus der Datenbank TD, wobei die isolierte Bildinformation y sich von der Trainingsbildinformation i unterscheidet.

Die nächsten Schritte im dargestellten Flussdiagramm sind das erste Berechnen CALC-1 eines berechneten Bildes G_y durch Anwendung der bildinformationsverarbeitenden ersten Funktion G auf die isolierte Bildinformation y mittels einer Recheneinheit FDU.2, das zweite Berechnen CALC-2 einer ersten berechneten Bildinformation D_x durch Anwendung einer bildverarbeitenden zweiten Funktion D auf das Trainingsbild x mittels der Recheneinheit FDU.2 sowie das dritte Berechnen CALC-3 einer zweiten berechneten Bildinformation D_G_y durch Anwendung der zweiten Funktion D auf das berechnete Bild G_y mittels der Recheneinheit FDU.2.

Als ein weiterer Schritt erfolgt das Anpassen ADJ eines Parameters der ersten Funktion G und der zweiten Funktion D basierend auf der ersten berechneten Bildinformation D_x und der zweiten berechneten Bildinformation D_G_y (und damit basierend auf dem berechneten Bild G_y) mittels der Recheneinheit FDU.2. Im dargestellten Beispiel erfolgt das Anpassen ADJ durch Minimierung einer Kostenfunktion mittels einem Stochastischem Gradientenverfahren (ein englischer Fachbegriff ist "stochastic gradient descent") und Rückpropagation. Alternativ können auch andere Algorithmen mit der Rückpropagation verwendet werden, beispielsweise ein adaptives Gradientenverfahren (ein englischer Fachbegriff ist "adaptive gradient descent", kurz "AdaGrad") oder eine adaptive Momentenschätzung (ein englischer Fachbegriff ist "adaptive moment estimation", kurz "AdaM"). Es können aber auch andere Optimierungsmethoden angewendet werden, beispielsweise simulierte Abkühlung (ein englischer Fachbegriff ist "simulated annealing") oder der Ameisenalgorithmus (ein englischer Fachbegriff ist "ant colony optimization").

Der letzte Schritt im dargestellten Verfahren ist das Bestimmen DET einer Trainingsfunktion TF, wobei hier die Trainingsfunktion TF identisch ist mit der bildinformationsverarbeitenden ersten Funktion G.

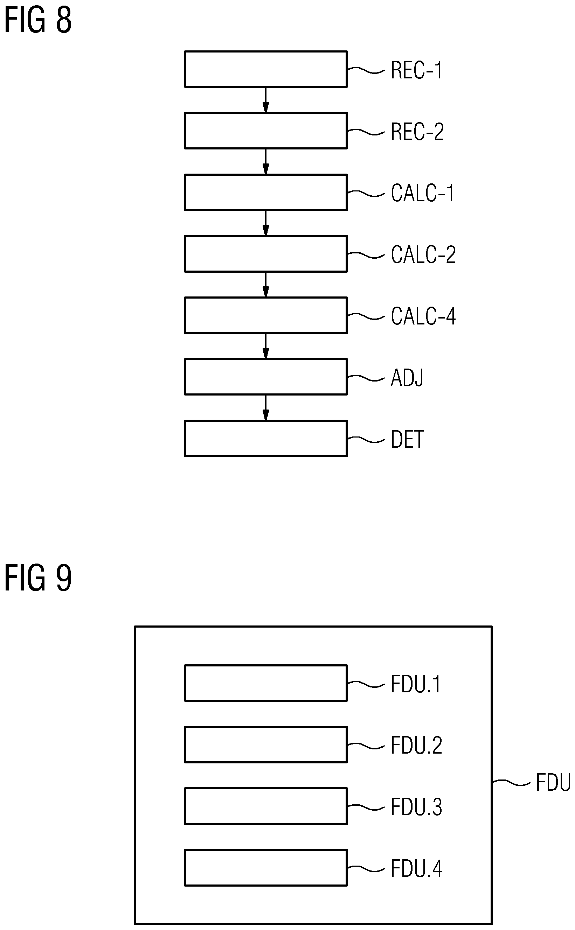

Fig. 8 zeigt ein Flussdiagramm des in Fig. 4 dargestellten dritten Ausführungsbeispiels des Verfahrens. Hierbei kann auch jeweils eine andere als die dargestellte Reihenfolge der Verfahrensschritte verwendet werden. Bezüglich der gleich bleibende Elemente REC-1 und REC-2 wird auf die Beschreibung des Flussdiagramms in Fig. 7 verwiesen. Die erste Funktion G ist in diesem Ausführungsbeispiel ein Informationsautoencoder, die zweite Funktion D ist ein Bildautoencoder.

Die nächsten Schritte im dargestellten Flussdiagramm sind das erste Berechnen CALC-1 der ersten Knotenwerte G3_y der zentralen Schicht G3 der ersten Funktion G bei Anwendung auf die isolierte Bildinformation y mittels der Recheneinheit FDU.2, das zweite Berechnen CALC-2 der zweiten Knotenwerte D3 x der zentralen Schicht D3 der zweiten Funktion D bei Anwendung auf das Trainingsbild x mittels der Recheneinheit FDU.2 sowie das vierte Berechnen CALC-4 von dritten Knotenwerten G3 i der zentralen Schicht G3 der ersten Funktion G bei Anwendung auf die Trainingsbildinformation i.

Als ein weiterer Schritt erfolgt in diesem Ausführungsbeispiel das Anpassen ADJ eines Parameters der ersten Funktion G und der zweiten Funktion D basierend auf den ersten Knotenwerten G3_y, den zweiten Knotenwerten D3_x und den dritten Knotenwerten G3_i mittels der Recheneinheit FDU.2. Das Anpassen ADJ erfolgt durch Minimieren einer Kostenfunktion durch Rückpropagation. Dabei verringert der Abstand zwischen den ersten Knotenwerten G3_y und den zweiten Knotenwerten D3_x die Kostenfunktion, der Abstand zwischen den zweiten Knotenwerten D3_x und den dritten Knotenwerten G3_i erhöht die Kostenfunktion. Weiterhin tragen im dargestellten Ausführungsbeispiel die Abstände zwischen dem Trainingsbild x und dem Ausgabewert x' der zweiten Funktion D, der Trainingsbildinformation i und dem Ausgabewert i' der ersten Funktion G positiv zur Kostenfunktion bei. Es ist auch möglich, dass der Abstand zwischen der isolierten Bildinformation y und dem Ausgabewert y' der ersten Funktion G positiv zur Kostenfunktion beiträgt.

Als weiterer Schritt im dargestellten Verfahren erfolgt das Bestimmen DET der Trainingsfunktion TF. Die Trainingsfunktion besteht hier aus einer Aneinanderreihung der Schichten G1, G2, G3 der ersten Funktion G vor dessen zentraler Schicht G3 mit den Schichten D3, D4, D5 der zweiten Funktion D nach dessen zentraler Schicht D3, wobei die Werte der zentralen Schicht G3 auf die Werte der zentralen Schicht D3 übertragen werden.

FIG 9 zeigt eine Funktionsbestimmungseinheit FDU zur Bestimmung einer Trainingsfunktion TF. Die hier gezeigte Funktionsbestimmungseinheit ist ausgelegt, ein erfindungsgemäßes Verfahren auszuführen. Diese Bestimmungseinheit FDU umfasst eine Schnittstelle FDU.1, eine Recheneinheit FDU.2, eine Speichereinheit FDU.3 sowie eine Ein- und Ausgabeeinheit FDU.4.

Bei der Funktionsbestimmungseinheit FDU kann es sich insbesondere um einen Computer, einen Mikrocontroller oder um einen integrierten Schaltkreis handeln. Alternativ kann es sich bei der Funktionsbestimmungseinheit FDU um einen realen oder virtuellen Verbund von Computern handeln (ein englischer Fachbegriff für einen realen Verbund ist "Cluster", ein englischer Fachbegriff für einen virtuellen Verbund ist "Cloud"). Bei einer Schnittstelle FDU.1 kann es sich um eine Hardware- oder Softwareschnittstelle handeln (beispielsweise PCI-Bus, USB oder Firewire). Eine Recheneinheit FDU.2 kann Hardware-Element oder Software-Elemente aufweisen, beispielsweise einen Mikroprozessor oder ein sogenanntes FPGA (englisches Akronym für "Field Programmable Gate Array"). Eine Speichereinheit FDU.3 kann als nicht dauerhafte Arbeitsspeicher (Random Access Memory, kurz RAM) oder als dauerhafter Massenspeicher (Festplatte, USB-Stick, SD-Karte, Solid State Disk) realisiert sein. Eine Ein- und Ausgabeeinheit FDU.4 umfasst wenigstens eine Eingabeeinheit und/oder wenigstens eine Ausgabeeinheit. Im gezeigten Ausführungsbeispiel kann die Ein- und Ausgabeeinheit FDU.4 dazu verwendet werden, Parameter des Verfahrens wie die Anzahl der Iterationen einzugeben, oder Informationen über das Verfahren wie eine mittlere Kostenfunktion dem Benutzer auszugeben.

Die Speichereinheit FDU.3 kann die Datenbank TD mit den Trainingsbildern x1, x2, ..., xN und den Trainingsbildinformationen i1, i2, ..., iN umfassen, die Datenbank TD kann aber auch separat von der Funktionsbestimmungseinheit FDU ausgeführt sein.

| Tabelle A: Pseudocode für das erste Ausführungsbeispiel | |
|---|---|
| A.1 | G.init(G_params_initial) |
| A.2 | D.init(D_params_initial) |
| A.3 | a = 0.01 |
| | |
| A.4 | for n from 1 to training_epochs: for each (tr_image, tr_info) in tr_data: |
| | |
| A.5 | calc_info = generate_calc_info() |
| A.6 | calc_image = G.apply_to(calc_info, random_data) |
| | |
| A.7 | rs_tr = D.apply_to(tr_image) |
| A.8 | D.params -= a*back_prop(D.prob_loss(1, rs_tr.prob) + D.info_loss(tr_info, res_tr.info)) |
| A.9 | rs_calc = D.apply_to(calc_image) |
| A.10 | D.params -= a*back_prop(D.prob_loss(0, rs_calc.prob)) |
| | |
| A.11 | rs_calc = D.apply_to(calc_image) |
| A.12 | G.params -= a*back_prop(G.prob_loss(rs_calc.prob)) |

Tabelle A zeigt Pseudocode für das erste Ausführungsbeispiel des Verfahrens, das in Fig. 2 schematisch dargestellt ist. In den Codezeilen A.1 und A.2 werden die erste Funktion "G" und die zweite Funktion "D" als künstliche neuronale Netzwerke mit Standardparametern initialisiert. Die Lerngeschwindigkeit "a" quantifiziert die Geschwindigkeit des Lernprozesses und wird in Zeile A.3 initialisiert.

In A.4 wird eine Schleife mit "trainings_epochs" Iterationen über eine Zählvariable "n" sowie eine Schleife über alle Paare aus Trainingsbildern "tr_image" und Trainingsbildinformationen "tr_info" in den Trainingsdaten "tr_data" definiert. Hierbei ist "trainings_epochs" eine vordefinierte ganze Zahl, welche die Anzahl der Trainingszyklen beschreibt.

In den Codezeilen A.5 und A.6 wird eine isolierte Bildinformation "calc_info" erzeugt, ohne auf die Trainingsbildinformationen zurückzugreifen. Aus der isolierten Bildinformation "calc_info" und Zufallszahlen "random_data" wird dann mittels der ersten Funktion "G" ein berechnetes Bild "calc_image" erzeugt.

In den Codezeilen A.7 und A.9 werden die Ergebnisse "rs_tr" und "rs_calc" der Anwendung der bildverarbeitenden zweiten Funktion "D" auf das Trainingsbild "tr_image" und das berechnete Bild "calc_image" ermittelt. Die Ergebnisse "rs_tr" und "rs_calc" umfassen die Wahrscheinlichkeiten "rs_tr.prob" und "rs_calc.prob", dass das Trainingsbild "tr_image" und das berechnete Bild "calc_image" in den Trainingsdaten "tr_data" enthalten sind. Weiterhin umfassen die Ergebnisse "rs_tr" und "rs_calc" die geschätzten Wahrscheinlichkeiten "rs_tr.info" und "rs_calc.info", dass der im Bild dargestellte Knochen einen Bruch aufweist.

In den Codezeilen A.8 und A.10 werden die Parameter "D.param" der zweiten Funktion "D" angepasst, indem die Kostenfunktion mittels Rückpropagation minimiert wird. Dieses Codezeilen sind so zu verstehen, dass die Funktion "back_prob" nicht nur die Werte der Kostenfunktion als Eingabe erhält, sondern auch die Werte der für die Rückpropagation notwendigen partiellen Ableitungen der Kostenfunktion. In der Codezeile A.8 setzt sich die Kostenfunktion zusammen aus dem Anteil "prob_loss" zusammen, der die Abweichung der Wahrscheinlichkeit, dass ein Bild in den Trainingsdaten enthalten ist, misst, und aus dem Anteil "info_loss", der die Abweichung zwischen der geschätzten Bildinformation und der tatsächlichen Bildinformation misst. Hierbei ist die Verwendung des additiven Anteils "info_loss" optional. Beide Teile der Kostenfunktion sind im gezeigten Ausführungsbeispiel durch eine binäre Kreuzentropie gegeben, natürlich sind auch andere funktionale Zusammenhänge für die Kostenfunktion vorstellbar, beispielsweise der quadratische Abstand.

In der Codezeilen A.11 wird erneut das Ergebnis "rs_calc" durch Anwendung der zweiten Funktion "D" auf das das berechnete Bild "calc_image" berechnet. Hierbei kann das Ergebnis "rs_calc" von der in A.9 berechneten Wahrscheinlichkeit abweichen, da in Codezeile A.10 die Parameter der ersten Funktion "D" angepasst wurden. In der Codezeile A.12 wird die Kostenfunktion "G.prob_loss" berechnet, und die Parameter "G.param" der ersten Funktion "G" durch Rückpropagation der Kostenfunktion unter Berücksichtigung der Lerngeschwindigkeit "a" angepasst.

Als Kostenfunktion der ersten Funktion "G" wird in diesem Ausführungsbeispiel eine logarithmische Kostenfunktion verwendet, die gegeben ist als G.loss(x) = log(x). Es sind aber auch andere Kostenfunktionen vorstellbar, die dazu führen, dass der Wert der Kostenfunktion im Intervall zwischen 0 und 1 für x = 1 maximal ist.

| Tabelle B: Pseudocode für das zweite Ausführungsbeispiel | |
|---|---|
| B.1 | G.init(G_params_initial) |
| B.2 | D.init(D_params_initial) |
| B.3 | a = 0.01 |
| B.4 | for n from 1 to training_epochs: for each (tr_image, tr_mask) in tr_data: |
| B.5 | other_mask = choose_other_info(tr_data, tr_mask) |
| B.6 | calc_image = G.apply(other_mask, random_data) |
| B.7 | pred_mask_tr = D.apply(tr_image) |
| B.8 | D.params -= a*back_prop(D.loss(pred_mask_tr, tr_mask)) |
| B.9 | pred_mask_calc = D.apply(calc_image) |
| B.10 | D.params -= a*back_prop(D.loss(pred_mask_calc, tr_mask)) |
| B.11 | pred_mask_calc = D.apply(calc_image) |
| B.12 | G.params -= a*back_prop(G.loss(pred_mask_calc, tr_mask)) |

In Tabelle B ist Pseudocode dargestellt, der das in Fig. 3 abgebildete zweite Ausführungsbeispiel des Verfahrens implementiert. In dem Pseudocode wird mit zweidimensionalen Bildern gearbeitet, er ist aber auch für drei- und höherdimensionale Bilder anwendbar. Die Bildinformation eines zweidimensionalen Bildes ist eine Maske, die eine Interessensregion im Bild markiert, beispielsweise ein gegebenes Organ.

Wie zuvor kann ein zweidimensionales Bild durch eine Ansammlung von NxM Pixeln beschrieben werden, die einen Intensitätswert oder Graustufe aufweisen. Ein Bild ist daher gleichzeitig ein Vektor in einem M·N-dimensionalen Vektorraum.

Eine Maske dieses Bildes, oder äquivalent die Segmentierung einer Interessensregion, ist dann ebenfalls ein Bild mit NxM Pixeln, wobei der Wert eines Pixels 0 ist, falls das Pixel außerhalb der Interessensregion liegt, und wobei der Wert eines Pixels 1 ist, falls das Pixel innerhalb der Interessensregion ist. Eine Maske kann daher ebenfalls als ein Vektor in einem M·N-dimensionalen Vektorraum beschrieben werden, wobei der Vektor nur Einträge 0 und 1 hat.

Die Codezeilen B.1 bis B.4 entsprechen den Codezeilen A.1 bis A.4 der Tabelle A. Die Trainingsdaten bestehen hier aus einem Trainingsbild "tr_image" und einer zugehörigen Maske "tr_mask". In der Codezeile B.5 wird eine isolierte Segmentierung "other_mask" aus den Trainingsdaten "tr_data" ausgewählt, die nicht mit der Trainingssegmentierung "tr_mask" identisch ist.

In der Codezeile B.6 wird mittels der ersten Funktion "G" aus der Maske "tr_mask" und zusätzlichen Zufallsdaten ein berechnetes Bild "calc_image" erzeugt. Mittels der zweiten Funktion "D" wird in Zeile B.7 eine Maske "pred_mask_tr" aus dem Trainingsbild "tr_image" bestimmt, und in Zeile B.8 Parameter "D.params" der zweiten Funktion "D" durch Rückpropagation der Differenzkostenfunktion zwischen "pred_mask_tr" und "tr_mask" angepasst. Weiterhin wird mittels der zweiten Funktion "D" in Zeile B.9 eine Maske "pred_mask_synth" aus dem berechneten Bild "calc_image" bestimmt, und in Zeile B.10 Parameter "D.params" der zweiten Funktion "D" durch Rückpropagation der Differenzkostenfunktion zwischen "pred_mask_synth" und "tr_mask" angepasst.

In den Codezeilen B.11 und B.12 wird erneut eine Maske "pred_mask_tr" aus dem Trainingsbild "tr_image" mittels des ANNs "D" bestimmt, wobei sich hier eine andere Maske ergibt, da sich die Parameter "D.params" der ersten Funktion "D" geändert haben, und Parameter "G.params" der ersten Funktion "G" durch Rückpropagation der Differenzkostenfunktion zwischen "pred_mask_synth" und "tr_mask" angepasst.

Als Kostenfunktion "loss(x,y)" der bildverarbeitenden zweiten Funktion "D" und der bildinformationsverarbeitenden ersten Funktion "G" kann jede Abstandsfunktion verwendet werden, welche den Abstand der zwei Eingaben x und y berechnet. In diesem Ausführungsbeispiel wird für die Kostenfunktion der bildverarbeitenden zweiten Funktion D der Sørensen-Dice-Koeffizient SD(x,y) eines Vektors oder einer Maske x und eines Vektors oder Maske y verwendet. Als Kostenfunktion der bildinformationsverarbeitenden ersten Funktion G wird in diesem Ausführungsbeispiel die Summe der quadrierten Differenzen (ein englischer Fachbegriff ist "sum of squared differences", kurz SSD) zweier Eingaben x und y verwendet.

| Tabelle C: Pseudocode für das erste Ausführungsbeispiel | |
|---|---|
| C.1 | G.init_autoencoder(G_params_initial) |
| C.2 | D.init_autoencoder(D_params_initial) |
| C.3 | a = 0.01 |
| C.4 | for n from 1 to training_epochs: for each (tr_image, tr_info) in tr_data: |
| C.5 | other_info = choose_other_info(tr_data, tr_info) |
| C.6 | tr_image_rcstr = D.apply(tr_image) |
| C.7 | loss_D = distance(tr_image, tr_image_rcstr) + reg |
| C.8 | tr_info_rcstr = G.apply(tr_info) |
| C.9 | loss_G = distance(tr_info, tr_info_rcstr) + reg |
| C.10 | nodes_tr_image = D.central_nodes(tr_image) |
| C.11 | nodes_tr_info = G.central_nodes(tr_info) |
| C.12 | nodes_other_info = G.central_nodes(other_info) |
| C.13 | loss_nodes = distance(nodes_tr_image, nodes_tr_info) - distance(nodes_tr_image, nodes_other_info) |
| C.14 | D.params -= a*back_prop(loss_D + loss_G + loss_nodes) |
| C.15 | G.params -= a*back_prop(loss_D + loss G + loss nodes) |

Die Codezeilen C.1 bis C.4 entsprechen in ihrer Wirkung den Codezeilen A.1 bis A.4. Die Variable "G" ist hier ein Informationsautoencoder, die Variable "D" ist hier ein Bildautoencoder. In Codezeile C.5 wird eine isolierte Bildinformation "other_info" aus den Trainingsdaten "tr_data" ausgewählt, die nicht der Trainingsbildinformation "tr_info" entspricht.

In den Codezeilen C.6 und C.7 wird der Bildautoencoder "D" auf das Trainingsbild "tr_image" angewendet, um ein rekonstruiertes Trainingsbild "tr_image_rcstr" zu erzeugen. Aus dem Abstand zwischen dem Trainingsbild "tr_image" und dem rekonstruierten Trainingsbild "tr_image_rcstr" wird der Beitrag "loss_D" des Bildautoencoders "D" zur Gesamtkostenfunktion berechnet. Die Berechnung schließt die Addition eines Terms "reg" zur Regularisierung ein, der von den Parametern des Bildautoencoders "D" abhängt und insbesondere als L2-Norm aller Parameter, insbesondere der Kantengewichte, des Bildautoencoder "D" berechnet werden kann.

In den Codezeilen C.8 und C.9 wird der Informationsautoencoder "G" auf die Trainingsbildinformation "tr_info" angewendet, um eine rekonstruierte Trainingsbildinformation "tr_info_rcstr" zu erzeugen. Aus dem Abstand zwischen der Trainingsbildinformation "tr_info" und der rekonstruierten Trainingsbildinformation "tr_info _rcstr" wird der Beitrag "loss_G" des Bildautoencoders "G" zur Gesamtkostenfunktion berechnet. Die Berechnung schließt die Addition eines Terms "reg" zur Regularisierung ein, der von den Parametern des Bildautoencoders "G" abhängt und insbesondere als L2-Norm aller Parameter, insbesondere der Kantengewichte, des Bildautoencoder "G" berechnet werden kann.

In den Codezeilen C.10 bis C.12 werden die Werte "nodes_tr_image", "nodes_tr_info" und "nodes_other_info" der Zentralknoten der Autoencoder "D" und "G" bei Anwendung auf das Trainingsbild "tr_image", die Trainingsbildinformation "tr_info" und die isolierte Bildinformation "other_info" berechnet. Der Beitrag "loss_nodes" zur Gesamtkostenfunktion ergibt sich in Codezeile C.13 als Differenz des Abstands der Knotenwerte "nodes_tr_image" und "nodes_tr_info" und des Abstands der Knotenwerte "nodes_tr_image" und "nodes_other_info". In diese Berechnung können optionalerweise auch noch andere Faktoren einfließen.

Durch Rückpropagation der Gesamtkostenfunktion, die sich aus der Summe der Beiträge "loss_D", "loss_G" und "loss_nodes" zusammensetzt, werden in den Codezeilen C.14 und C.15 die Parameter der Autoencoder "D" und "G" angepasst.

**Patentansprüche**

1. Verfahren zum Bestimmen einer Trainingsfunktion, umfassend folgende Verfahrensschritte:

- Erstes Empfangen (REC-1) eines Trainingsbildes (x) und einer Trainingsbildinformation (i) mittels einer Schnittstelle (FDU.1),
wobei die Trainingsbildinformation (i) eine Bildinformation des Trainingsbildes (x) ist,
- Zweites Empfangen (REC-2) einer isolierten Bildinformation (y) mittels der Schnittstelle (FDU.1),
wobei die isolierte Bildinformation von dem Trainingsbild (x) unabhängig ist,
- Erstes Berechnen (CALC-1) eines ersten Ergebnisses (G_y, G3_y) einer bildinformationsverarbeitenden ersten Funktion (G) bei Anwendung auf die isolierte Bildinformation (y) mittels einer Recheneinheit (FDU.2),
- Zweites Berechnen (CALC-2) eines zweiten Ergebnisses (D_x, D3_x) einer bildverarbeitenden zweiten Funktion (D) bei Anwendung auf das Trainingsbild (x) mittels der Recheneinheit (FDU.2),
- Anpassen (ADJ) eines Parameters der bildinformationsverarbeitenden ersten Funktion (G) und/oder der bildverarbeitenden zweiten Funktion (D) basierend wenigstens auf dem ersten Ergebnis (G_y, G3_y) und dem zweiten Ergebnis (D_x, D3_x) mittels der Recheneinheit (FDU.2),
- Bestimmen (DET) einer Trainingsfunktion (TF) basierend auf der bildinformationsverarbeitenden ersten Funktion (G) mittels der Recheneinheit (FDU.2),

wobei die Trainingsfunktion (TF) bei Anwendung auf eine Bildinformation (y) ein zugehöriges Bild (G_y, TF_y) als Ausgabewert generiert.

2. Verfahren nach Anspruch 1, wobei die erste Funktion (G) und/oder die zweite Funktion (D) durch ein künstliches neuronales Netzwerk (ANN) gegeben sind, und wobei die Parameter des künstlichen neuronalen Netzwerks (ANN) die Kantengewichte des künstlichen neuronalen Netzwerks (ANN) umfassen.

3. Verfahren nach Anspruch 2, wobei das Anpassen (ADJ) der Kantengewichte durch Minimierung einer Kostenfunktion mittels Rückpropagation erfolgt.

4. Verfahren einem der vorherigen Ansprüche, wobei eine Bildinformation eines Bildes eine Segmentierung des Bildes in wenigstens eine Bildregion umfasst.

5. Verfahren nach einem der vorherigen Ansprüche, wobei eine Bildinformation eines Bildes eine Größe umfasst, die bewertet, ob ein gegebenes Objekt oder mehrere gegebene Objekte im Bild dargestellt sind.

6. Verfahren nach einem der vorherigen Ansprüche,

- wobei die bildinformationsverarbeitende erste Funktion (G) eine Generatorfunktion ist, wobei eine Generatorfunktion bei Anwendung auf eine Bildinformation (y) ein zugehöriges Bild (G_y) als Ausgabewert generiert,
- wobei die bildverarbeitende zweite Funktion (D) eine Klassifikationsfunktion ist, wobei eine Klassifikationsfunktion bei Anwendung auf ein Bild (x, G_y) eine zugehörige Bildinformation (D_x, D_G_y) als Ausgabewert generiert,
- wobei das erste Ergebnis ein berechnetes Bild (G_y) ist,
- wobei das zweite Ergebnis eine erste berechnete Bildinformation (D_x) ist,
- und wobei die Trainingsfunktion (TF) die bildinformationsverarbeitende erste Funktion (G) ist,
- wobei das Verfahren weiterhin ein drittes Berechnen (CALC-3) einer zweiten berechneten Bildinformation (D_G_y) durch Anwenden der bildverarbeitenden Funktion (D) auf das berechnete Bild (G_y) umfasst.

7. Verfahren nach Anspruch 6,
wobei die erste berechnete Bildinformation (D_x) eine Schätzung einer ersten Wahrscheinlichkeit umfasst, dass das Trainingsbild (x) in einer Menge von Trainingsbildern (x1, x2, ..., xN) enthalten ist,
und wobei die zweite berechnete Bildinformation (D_G_y) eine Schätzung einer zweiten Wahrscheinlichkeit umfasst, dass das berechnete Bild (G_y) in einer Menge von Trainingsbildern (x1, x2, ..., xN) enthalten ist.

8. Verfahren nach Anspruch 7, rückbezogen auf Anspruch 3, wobei die Kostenfunktion wenigstens auf einer ersten Abweichung ($\varepsilon$1) der ersten berechneten Bildinformation (D_x) von der Trainingsbildinformation (i) basiert.

9. Verfahren nach Anspruch 8, wobei die Kostenfunktion weiterhin wenigstens auf einer zweiten Abweichung ($\varepsilon$2) der zweiten berechneten Bildinformation (D_G_y) von der isolierten Bildinformation (y) basiert.

10. Verfahren nach einem der Ansprüche 2 bis 5,

- wobei die bildinformationsverarbeitende erste Funktion (G) ein Informationsautoencoder ist, wobei ein Informationsautoencoder bei Anwendung auf eine erste Bildinformation (y, i) eine zweite Bildinformation (y, i') als Ausgabewert generiert,
- wobei die bildverarbeitende zweite Funktion (D) ein Bildautoencoder ist, wobei ein Bildautoencoder bei Anwendung auf ein erstes Bild (x) ein zweites Bild (x') als Ausgabewert generiert,
- wobei die zentrale Schicht (G3) des Informationsautoencoders und die zentrale Schicht (D3) des Bildautoencoders die gleiche Anzahl an Zentralknoten aufweist,
- wobei das erste Ergebnis (G3_y) ersten Knotenwerten (G3_y) entspricht,
wobei die ersten Knotenwerte (G3_y) die Werte der Knoten der zentralen Schicht (G3) des Informationsautoencoders sind, wenn die isolierte Bildinformation (y) der Eingabewert des Informationsautoencoders ist,
- wobei das zweite Ergebnis (D3_x) zweiten Knotenwerten (D3_x) entspricht,
wobei die zweiten Knotenwerte (D3_x) die Werte der Knoten der zentralen Schicht (D3) des Bildautoencoders sind, wenn das Trainingsbild (x) der Eingabewert des Bildautoencoders ist,
- wobei das Verfahren weiterhin ein viertes Berechnen (CALC-4) von dritten Knotenwerten (G3_i) umfasst,
wobei die dritten Knotenwerte (G3 i) die Werte der Knoten der zentralen Schicht (G3) des Informationsautoencoders sind, wenn die Trainingsbildinformation (i) der Eingabewert des Informationsautoencoders ist,
- wobei die Trainingsfunktion (TF) eine Komposition des ersten Teils (G1, G2, G3) des Informationsautoencoders mit dem zweiten Teil (D3, D4, D5) des Bildautoencoders ist.

11. Verfahren nach Anspruch 10 rückbezogen auf Anspruch 3, wobei ein Abstand der ersten Knotenwerte (G3_y) zu den zweiten Knotenwerten (D3_x) einen negativen Beitrag zur Kostenfunktion leistet, und wobei ein Abstand der zweiten Knotenwerte (D3_x) zu den dritten Knotenwerte (G3_i) einen positiven Beitrag zur Kostenfunktion leistet.

12. Verfahren nach Anspruch 10 oder 11, wobei die Trainingsfunktion derart aus einer Bildinformation (y) als Eingabewert ein Bild (TF_y) als Ausgabewert generiert,
dass eine Bildinformation (y) als Eingabewert des Informationsautoencoders verwendet wird,
die Knotenwerte (G3_y) der zentralen Schicht (G3) des Informationsautoencoders auf die Knotenwerte der zentralen Schicht (D3) des Bildautoencoders übertragen werden,
und der Ausgabewert (TF_y) der Trainingsfunktion (TF) dem resultierenden Ausgabewert (TF_y) des Bildautoencoders entspricht.

13. Funktionsbestimmungseinheit (FDU) zum Bestimmen einer Trainingsfunktion, umfassend folgende Einheiten:

- Schnittstelle (FDU.1), ausgebildet zum ersten Empfangen (REC-1) eines Trainingsbildes (x) und einer Trainingsbildinformation (i),
wobei die Trainingsbildinformation (i) eine Bildinformation des Trainingsbildes (x) ist,
weiterhin ausgebildet zum zweiten Empfangen (REC-2) einer isolierten Bildinformation (y),
wobei die isolierte Bildinformation von dem Trainingsbild (x) unabhängig ist,
- Recheneinheit (FDU.2), ausgebildet zum ersten Berechnen (CALC-1) eines ersten Ergebnisses (G_y, G3_y) einer bildinformationsverarbeitenden ersten Funktion (G) bei Anwendung auf die isolierte Bildinformation (y),
weiterhin ausgebildet zum zweiten Berechnen (CALC-2) eines zweiten Ergebnisses (D_x, D3_x) einer bildverarbeitenden zweiten Funktion (D) bei Anwendung auf das Trainingsbild (x), weiterhin ausgebildet zum Anpassen (ADJ) eines Parameters der bildinformationsverarbeitenden ersten Funktion (G) und/oder der bildverarbeitenden zweiten Funktion (D) basierend wenigstens auf dem ersten Ergebnis (G_y, G3_y) und/oder dem zweiten Ergebnis (D_x, D3_x),
weiterhin ausgebildet zum Bestimmen (DET) einer Trainingsfunktion (G, TF) basierend auf der bildinformationsverarbeitenden ersten Funktion (G), wobei die Trainingsfunktion (G, TF) bei Anwendung auf eine Bildinformation (y) ein zugehöriges Bild (G_y, TF_y) als Ausgabewert generiert.

14. Funktionsbestimmungseinheit (FDU) nach Anspruch 13, weiterhin ausgebildet ein Verfahren nach einem der Ansprüche 1 bis 12 auszuführen.

15. Computerprogrammprodukt mit einem Computerprogramm, welches direkt in einen Speicher (FDU.3) einer Funktionsbestimmungseinheit (FDU) ladbar ist, mit Programmabschnitten, um alle Schritte des Verfahrens nach einem der Ansprüche 1 bis 12 auszuführen, wenn die Programmabschnitte von der Funktionsbestimmungseinheit (FDU) ausgeführt werden.

16. Computerlesbares Speichermedium, auf welchem von einer Funktionsbestimmungseinheit (FDU) lesbare und ausführbare Programmabschnitte gespeichert sind, um alle Schritte des Verfahrens nach einem der Ansprüche 1 bis 12 auszuführen, wenn die Programmabschnitte von der Funktionsbestimmungseinheit (FDU) ausgeführt werden.

**Claims**

1. Method for determining a training function comprising the following method steps:

   - first reception (REC-1) of a training image (x) and an item of training-image information (i) by means of an interface (FDU.1),
   wherein the training-image information (i) is image information for the training image (x),
   - second reception (REC-2) of an isolated item of image information (y) by means of the interface (FDU.1),
   wherein the isolated item of image information is independent of the training image (x),
   - first calculation (CALC-1) of a first result (G_y, G3_y) of an image-information-processing first function (G) when applied to the isolated item of image information (y) by means of a computing unit (FDU.2),
   - second calculation (CALC-2) of a second result (D_x, D3_x) of an image-processing second function (D) when applied to the training image (x) by means of the computing unit (FDU.2),
   - adjustment (ADJ) of a parameter of the image-information-processing first function (G) and/or the image-processing second function (D) based on at least the first result (G_y, G3_y) and the second result (D_x, D3_x) by means of the computing unit (FDU.2),
   - determination (DET) of a training function (TF) based on the image-information-processing first function (G) by means of the computing unit (FDU.2),

   wherein, when applied to an item of image information (y), the training function (TF) generates an associated image (G_y, TF_y) as an output value.

2. Method according to claim 1, wherein the first function (G) and/or the second function (D) is/are provided by an artificial neural network (ANN) and wherein the parameters of the artificial neural network (ANN) comprise the edge weights of the artificial neural network (ANN).

3. Method according to claim 2, wherein the adjustment (ADJ) of the edge weights is performed by minimising a cost function by means of backpropagation.

4. Method according to one of the preceding claims, wherein an item of image information of an image comprises segmentation of the image into at least one image region.

5. Method according to one of the preceding claims, wherein an item of image information of an image comprises a variable that assesses whether a defined object or a plurality of defined objects are depicted in the image.

6. Method according to one of the preceding claims,

   - wherein the image-information-processing first function (G) is a generator function, wherein, when applied to an item of image information (y), a generator function generates an associated image (G_y) as an output value,
   - wherein the image-processing second function (D) is a classification function, wherein, when applied to an image (x, G_y), a classification function generates an associated item of image information (D_x, D_G_y) as an output value,
   - wherein the first result is a calculated image (G_y),
   - wherein the second result is a first item of calculated image information (D_x),
   - and wherein the training function (TF) is the image-information-processing first function (G),
   - wherein the method furthermore comprises a third calculation (CALC-3) of a second item of calculated image information (D_G_y) by applying the image-processing function (D) to the calculated image (G_y).

7. Method according to claim 6,
   wherein the first item of calculated image information (D_x) comprises an estimation of a first probability of the training image (x) being contained in a set of training images (x1, x2, ..., xN),
   and wherein the second item of calculated image information (D_G_y) an estimation of a second probability of the calculated image (G_y) being contained in a set of training images (x1, x2, ..., xN).

8. Method according to claim 7, related back to claim 3, wherein the cost function is based on at least a first difference ($\varepsilon$1) of the first item of calculated image information (D_x) from the training-image information (i).

9. Method according to claim 8, wherein the cost function is furthermore based on at least a second difference ($\varepsilon$2) of the second item of calculated image information (D_G_y) from the isolated item of image information (y).

10. Method according to one of claims 2 to 5,

 - wherein the image-information-processing first function (G) is an information autoencoder, wherein, when applied to a first item of image information (y, i), an information autoencoder generates a second item of image information (y, i') as an output value,
 - wherein the image-processing second function (D) is an image autoencoder, wherein, when applied to a first image (x), an image autoencoder generates a second image (x') as an output value,
 - wherein the central layer (G3) of the information autoencoder and the central layer (D3) of the image autoencoder have the same number of central nodes,
 - wherein the first result (G3_y) corresponds to first node values (G3_y),
 wherein the first node values (G3_y) are the values of the nodes of the central layer (G3) of the information autoencoder when the isolated item of image information (y) is the input value of the information autoencoder,
 - wherein the second result (D3_x) corresponds to second node values (D3_x),
 wherein the second node values (D3_x) are the values of the nodes of the central layer (D3) of the image autoencoder when the training image (x) is the input value of the image autoencoder,
 - wherein the method furthermore comprises a fourth calculation (CALC-4) of third node values (G3_i),
 wherein the third node values (G3_i) are the values of the nodes of the central layer (G3) of the information autoencoder when the training-image information (i) is the input value of the information autoencoder,
 - wherein the training function (TF) is composed of the first part (G1, G2, G3) of the information autoencoder with the second part (D3, D4, D5) of the image autoencoder.

11. Method according to claim 10 related back to claim 3,
 wherein a distance between the first node values (G3_y) and the second node values (D3_x) makes a negative contribution to the cost function and wherein a distance between the second node values (D3_x) and the third node values (G3_i) makes a positive contribution to the cost function.

12. Method according to claim 10 or 11, wherein the training function generates an image (TF_y) as an output value from an item of image information (y) as an input value such that an item of image information (y) is used as an input value of the information autoencoder,
 the node values (G3_y) of the central layer (G3) of the information autoencoder are transferred to the node values of the central layer (D3) of the image autoencoder,
 and the output value (TF_y) of the training function (TF) corresponds to the resulting output value (TF_y) of the image autoencoder.

13. Function-determining unit (FDU) for determining a training function comprising the following units:

 - an interface (FDU.1) embodied for the first reception (REC-1) of a training image (x) and training-image information (i), wherein the training-image information (i) is image information for the training image (x), furthermore embodied for the second reception (REC-2) of an isolated item of image information (y), wherein the isolated item of image information is independent of the training image (x),
 - a computing unit (FDU.2) embodied for the first calculation (CALC-1) of a first result (G_y, G3_y) of an image-information-processing first function (G) when applied to the isolated item of image information (y), furthermore embodied for the second calculation (CALC-2) of a second result (D_x, D3_x) of an image-processing second function (D) when applied to the training image (x), furthermore embodied for the adjustment (ADJ) of a parameter of the image-information-processing first function (G) and/or the image-processing second function (D) based on at least the first result (G_y, G3_y) and/or the second result (D_x, D3_x), furthermore embodied for the determination (DET) of training function (G, TF) based on the image-information-processing first function (G), wherein, when applied to an item of image information (y), the training function (G, TF) generates an associated image (G_y, TF_y) as an output value.

14. Function-determining unit (FDU) according to claim 13 furthermore embodied to carry out the method according to one of claims 1 to 12.

**15.** Computer program product with a computer program, which can be loaded directly into a memory (FDU.3) of a function-determining unit (FDU), with program sections for carrying out all the steps of the method according to one of claims 1 to 12 when the program sections are executed by the function-determining unit (FDU).

**16.** Computer-readable storage medium on which program sections, which can be read and executed by a function-determining unit (FDU), are stored for carrying out all the steps of the method according to one of claims 1 to 12 when the program sections are executed by the function-determining unit (FDU).

**Revendications**

**1.** Procédé de détermination d'une fonction d'apprentissage, comprenant les stades de procédé suivants :

- première réception (REC-1) d'une image (x) d'apprentissage et d'une information (i) d'image d'apprentissage au moyen d'une interface (FDU.1), l'information (i) d'image d'apprentissage étant une information d'image de l'image (x) d'apprentissage,
- deuxième réception (REC-2) d'une information (y) d'image isolée au moyen de l'interface (FDU.1), l'information d'image isolée étant indépendante de l'image (x) d'apprentissage,
- premier calcul (CALC-1) d'un premier résultat (G_y, G3_y) d'une première fonction (G) de traitement de l'information d'image par application à l'information (y) d'image isolée au moyen d'une unité (FDU.2) de calcul,
- deuxième calcul (CALC-2) d'un deuxième résultat (D_x, D3_x) d'une deuxième fonction (D) de traitement de l'image par application à l'image (x) d'apprentissage au moyen de l'unité (FDU.2) de calcul,
- adaptation (ADJ) d'un paramètre de la première fonction (G) de traitement de l'information d'image et/ou de la deuxième fonction (D) de traitement de l'information d'image sur la base d'au moins le premier résultat (G_y, G3_y) et du deuxième résultat (D_x, D3_x) au moyen de l'unité (FDU.2) de calcul,
- détermination (DET) d'une fonction (TF) d'apprentissage sur la base de la première fonction (G) de traitement de l'information d'image au moyen de l'unité (FDU.2) de calcul,

la fonction (TF) d'apprentissage produisant, par application à une information (y) d'image, une image (G_y, TF_y) associée, comme valeur de sortie.

**2.** Procédé suivant la revendication 1, dans lequel la première fonction (G) et/ou la deuxième fonction (D) sont données par un réseau (ANN) neuronal artificiel et dans lequel les paramètres du réseau (ANN) neuronal artificiel comprennent les poids de bord du réseau (ANN) neuronal artificiel.

**3.** Procédé suivant la revendication 2, dans lequel l'adaptation (ADJ) des poids de bord s'effectue en minimisant une fonction de coût au moyen d'une rétropropagation.

**4.** Procédé suivant l'une des revendications précédentes, dans lequel une information d'image d'une image comprend une segmentation de l'image en au moins une région d'image.

**5.** Procédé suivant l'une des revendications précédentes, dans lequel une information d'image d'une image comprend une grandeur, qui évalue si un objet donné ou plusieurs objets donnés sont représentés dans l'image.

**6.** Procédé suivant l'une des revendications précédentes,

- dans lequel la première fonction (G) de traitement de l'information d'image est une fonction de générateur, une fonction de générateur produisant, par application à une information (y) d'image, une image (G_y) associée, comme valeur de sortie,
- dans lequel la deuxième fonction (D) de traitement de l'image est une fonction de classification, une fonction de classification produisant, lors de l'application à une image (x, G_y), une information (D_x, D_G_y) d'image associée, comme valeur de sortie,
- dans lequel le premier résultat est une image (G_y) calculée,
- dans lequel le deuxième résultat est une première information (D_x) d'image calculée,
- et dans lequel la fonction (TF) d'apprentissage est la première fonction (G) de traitement de l'information d'image,
- dans lequel le procédé comprend, en outre, un troisième calcul (CALC-3) d'une deuxième information (D_G_y) d'image calculée par application de la fonction (D) de traitement d'image à l'image (G_y) calculée.

**7.** Procédé suivant la revendication 6,
dans lequel la première information (D_x) d'image calculée comprend une estimation d'une première probabilité, que l'image (x) d'apprentissage soit contenue dans un ensemble d'images (x1, x2, ..., xN) d'apprentissage, et dans lequel la deuxième information (D_G_y) d'image calculée comprend une estimation d'une deuxième probabilité, que l'image (G_y) calculée soit contenue dans un ensemble d'images (x1, x2, ..., xN) d'apprentissage.

**8.** Procédé suivant la revendication 7, quand elle se rapporte à la revendication 3, dans lequel la fonction de coût repose au moins sur un premier écart (ε1) de la première information (D_x) d'image calculée à l'information (i) d'apprentissage.

**9.** Procédé suivant la revendication 8, dans lequel la fonction de coût repose, en outre, au moins sur un deuxième écart (ε2) de la deuxième information (D_G_y) d'image calculée à l'information (y) d'image isolée.

**10.** Procédé suivant l'une des revendications 2 à 5,

- dans lequel la première fonction (G) de traitement de l'information d'image est un autoencodeur d'information, un autoencodeur d'information produisant, par application à une première information (y, i) d'image, une deuxième information (y, i') d'image, comme valeur de sortie,
- dans lequel la deuxième fonction (D) de traitement d'image est un autoencodeur d'image, un autoencodeur d'image produisant, par application à une première image (x), une deuxième image (x'), comme valeur de sortie,
- dans lequel la couche (G3) centrale de l'autoencodeur d'information et la couche (D3) centrale de l'autoencodeur d'image ont le même nombre de noeuds centraux,
- dans lequel le premier résultat (G3_y) correspond à de premières valeurs (G3_y) de noeuds,
- dans lequel les premières valeurs (G3_y) de noeuds sont les valeurs des noeuds de la couche (G3) centrale de l'autoencodeur d'information, lorsque l'information (y) d'image isolée est la valeur d'entrée de l'autoencodeur d'information,
- dans lequel le deuxième résultat (D3_x) correspond à des deuxièmes valeurs (D3_x) de noeuds, les deuxième valeurs (D3_x) de noeuds étant les valeurs des noeuds de la couche (D3) centrale de l'autoencodeur d'image, lorsque l'image (x) d'apprentissage est la valeur d'entrée de l'autoencodeur d'image,
- dans lequel le procédé comprend, en outre, un quatrième calcul (CALC-4) de troisièmes valeurs (G3_i) de noeuds, les troisièmes valeurs (G3_i) de noeuds étant les valeurs des noeuds de la couche (G3) centrale de l'autoencodeur d'information, lorsque l'information (i) d'image d'apprentissage est la valeur d'entrée de l'autoencodeur d'information,
- dans lequel la fonction (TF) d'apprentissage est une composition de la première partie (G1, G2, G3) de l'autoencodeur d'information avec la deuxième partie (D3, D4, D5) de l'autoencodeur d'image.

**11.** Procédé suivant la revendication 10, lorsqu'elle se rapporte à la revendication 3, dans lequel une distance des premières valeurs (G3-y) de noeuds aux deuxièmes valeurs (D3_x) de noeuds donne une contribution négative à la fonction de coût et dans lequel une distance des deuxièmes valeurs (D3_x) de noeuds aux troisièmes valeurs (G3_i) de noeuds donne une contribution positive à la fonction de coût.

**12.** Procédé suivant la revendication 10 ou 11, dans lequel la fonction d'apprentissage produit, à partir d'une information (y) d'image, comme valeur d'entrée, une image (TF_y), comme valeur de sortie, de manière à utiliser une information (y) d'image comme valeur d'entrée de l'autoencodeur d'information, les valeurs (G3_y) de noeuds de la couche (G3) centrale de l'autoencodeur d'information sont transmises aux valeurs de noeuds de la couche (D3) centrale de l'autoencodeur d'image, et la valeur (TF_y) de sortie de la fonction (TF) d'apprentissage correspondant à la valeur (TF_y) de sortie en résultant de l'autoencodeur d'image.

**13.** Unité (FDU) de détermination de fonction, pour déterminer une fonction d'apprentissage, comprenant les unités suivantes :

- interface (FDU.1), constituée pour la première réception (REC-1) d'une image (x) d'apprentissage et d'une information (i) d'image d'apprentissage, l'information (i) d'image d'apprentissage étant une information d'image de l'image (x) d'apprentissage, constituée, en outre, pour la deuxième réception (REC-2) de l'information (y) d'image isolée, l'information d'image isolée étant indépendante de l'image (x) d'apprentissage,

- unité (FDU.2) de calcul, constituée pour le premier calcul (CALC-1) d'un premier résultat (G-y, G3-y) d'une première fonction (G) de traitement d'information d'image par application à l'information (y) d'image isolée, constituée, en outre, pour le deuxième calcul (CALC-2) d'un deuxième résultat (D_x, D3_x) d'une deuxième fonction (D) de traitement d'image, par application à l'image (x) d'apprentissage, constituée, en outre, pour l'adaptation (ADJ) d'une paramètre de la première fonction (G) de traitement de l'information d'image et/ou de la deuxième fonction (D) de traitement d'image sur la base d'au moins le premier résultat (G_y, G3_y) et/ou du deuxième résultat (D_x, D3-x), constituée, en outre, pour la détermination (DET) d'une fonction (G, TF) d'apprentissage reposant sur la première fonction (G) de traitement de l'information d'image, la fonction (G, TF) d'apprentissage produisant, par application à une information (y) d'image, une image (G_y, TF-y) associée, comme valeur de sortie.

14. Unité (FDU) de détermination de fonction suivant la revendication 13, constituée, en outre, pour effectuer un procédé suivant l'une des revendications 1 à 12.

15. Produit de programme d'ordinateur, comprenant un programme d'ordinateur, qui peut être chargé directement dans une mémoire (FDU.3) d'une unité (FDU) de détermination de fonction, ayant des parties de programme, pour effectuer tous les stades du procédé suivant l'une des revendications 1 à 12, lorsque les parties de programme sont réalisées par l'unité (FDU) de détermination de fonction.

16. Support de mémoire déchiffrable par ordinateur, dans lequel sont mémorisées des parties de programme pouvant être lues et réalisées par une unité (FDU) de détermination de fonction, pour effectuer tous les stades du procédé suivant l'une des revendications 1 à 12, lorsque les parties de programme sont réalisées par l'unité (FDU) de détermination de fonction.

# FIG 1

Stand der Technik

# FIG 2

# FIG 3

# FIG 4

## FIG 5

# FIG 6

# FIG 7

REC-1

REC-2

CALC-1

CALC-2

CALC-3

ADJ

DET

## FIG 8

```
┌─────────────────┐
│                 │─── REC-1
└─────────────────┘
         │
         ▼
┌─────────────────┐
│                 │─── REC-2
└─────────────────┘
         │
         ▼
┌─────────────────┐
│                 │─── CALC-1
└─────────────────┘
         │
         ▼
┌─────────────────┐
│                 │─── CALC-2
└─────────────────┘
         │
         ▼
┌─────────────────┐
│                 │─── CALC-4
└─────────────────┘
         │
         ▼
┌─────────────────┐
│                 │─── ADJ
└─────────────────┘
         │
         ▼
┌─────────────────┐
│                 │─── DET
└─────────────────┘
```

## FIG 9

```
┌───────────────────────────┐
│   ┌─────────────────┐      │
│   │                 │── FDU.1
│   └─────────────────┘      │
│                            │
│   ┌─────────────────┐      │
│   │                 │── FDU.2
│   └─────────────────┘      │
│                            │──── FDU
│   ┌─────────────────┐      │
│   │                 │── FDU.3
│   └─────────────────┘      │
│                            │
│   ┌─────────────────┐      │
│   │                 │── FDU.4
│   └─────────────────┘      │
└───────────────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015238148 A1

- US 2016358337 A1

**In der Beschreibung aufgeführte Nicht-Patentliteratur**

- **MILLETARI et al.** *Hough-CNN: Deep Learning for Segmentation of Deep Brain Regions in MRI and Ultrasound, https://arxiv.org/abs/ 1601.07014v3*

- Learning and Transferring Mid-level Image Representations Using Convolutional Neural Networks. **OQUAB et al.** IEEE Conference on Computer Vision and Pattern Recognition (CVPR). IEEE, 2014, 1717-1724

- **IAN J. GOODFELLOW.** Generative Adversarial Networks. *arxiv 1406.2661,* 2014